# EUROPEAN PATENT SPECIFICATION

(11) **EP 2 579 668 B1**
(45) Date of publication and mention of the grant of the patent: **26.10.2016**
(21) Application number: 11786470.2
(22) Date of filing: 06.05.2011
(51) Int. Cl.: H04L 5/00, H04W 24/00, H04W 72/02, H04W 28/06, H04W 48/16, H04W 76/04, H04W 72/04

(54) **MOBILE STATION, RADIO BASE STATION, AND COMMUNICATIONS CONTROL METHOD**
MOBILSTATION, RADIOBASISSTATION UND KOMMUNIKATIONSSTEUERVERFAHREN
STATION MOBILE, STATION DE BASE RADIO, ET PROCÉDÉ DE COMMANDE DE COMMUNICATION

(30) Priority: 24.05.2010 JP 2010118834
(43) Date of publication of application: 10.04.2013
(73) Proprietor: NTT DoCoMo, Inc., Tokyo 100-6150 (JP)
(72) Inventor: ISHII, Hiroyuki, Tokyo 100-6150 (JP); IWAMURA, Mikio, Tokyo 100-6150 (JP); UMESH, Anil, Tokyo 1006150 (JP)
(74) Representative: Hoffmann Eitle
(86) International application number: PCT/JP2011/060607
(87) International publication number: WO 2011/148770

(56) References cited:
- WO-A1-2010/032675
- US-A1- 2009 270 103
- ERICSSON ET AL: "Summary of the email discussion [68#23] LTE: CC activation / deactivation", 3GPP DRAFT; R2-100079 SUMMARY OF THE EMAIL DISCUSSION 68-23 LTE CC ACTIVATION DEACTIVATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118 - 20100122, 11 January 2010 (2010-01-11), XP050604907,
- HUAWEI: "Measurements on deactivated CC", 3GPP DRAFT; R2-101021 MEASUREMENT ON DEACTIVATED CC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 15 February 2010 (2010-02-15), XP050421595,
- HUAWEI: 'Measurements on deactivated CC' 3GPP TSG RAN WG2 MEETING #69 R2-101021 26 February 2010, XP050421595
- PANASONIC: 'Open issues on component carrier activation and deactivation' 3GPP TSG-RAN WG2 MEETING #69 R2-101082 26 February 2010, XP050421748
- NOKIA ET AL: "Need for measurement gaps with carrier aggregation", 3GPP DRAFT; R4-101386, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Dublin; 20100412, 9 April 2010 (2010-04-09), XP050427486, [retrieved on 2010-04-09]
- HUAWEI: "Further discussion on measurement in CA", 3GPP DRAFT; R4-101375, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Dublin; 20100412, 9 April 2010 (2010-04-09), XP050427478, [retrieved on 2010-04-09]

## Description

### TECHNICAL FIELD

The present invention relates to a mobile station, a radio base station, and a communication control method.

### BACKGROUND ART

As a successor of a WCDMA (Wideband Code Division Multiplexing Access) system, an HSDPA (High-Speed Downlink Packet Access) system, and an HSUPA (High-Speed Uplink Packet Access) system, an LTE (Long Term Evolution) system has been considered and standardized by 3GPP (The 3rd Generation Partnership Project), which is a standardization organization of WCDMA.

Furthermore, as a successor of the LTE system, an LTE-advanced system is under consideration by 3GPP. The requirements for the LTE-advanced system are summarized in the non-patent document 1.

As one of the requirements in the LTE-advanced system, an agreement is reached that carrier aggregation is applied. When carrier aggregation is applied, a mobile station UE can receive downlink signals simultaneously using plural carriers or transmit uplink signals simultaneously using plural carriers. Each carrier used in carrier aggregation is referred to as a "component carrier".

The plural component carriers are categorized into a primary component carrier as a main carrier and one or more secondary component carriers other than the primary component carrier.

When a mobile station UE performs communications always using the primary component carrier and the secondary component carriers, a problem arises that power consumption becomes higher in proportion to the number of component carriers. As used herein, communicating using the primary component carrier and the secondary component carriers includes usual data transmission and reception, cell search or measurement on the respective carriers, and radio link monitoring.

For example, the cell search includes establishing synchronization in downlink using downlink synchronization signals in a serving cell and an adjacent cell. Since cell search is the processing for detecting a destination cell while a mobile station UE is moving, the mobile station UE periodically needs to perform cell search. For example, the measurement includes measuring received power (more specifically, RSRP (Reference Signal Received Power) or the like) of reference signals in a serving cell and an adjacent cell. It should be noted that the combined processing of cell search and measurement may be referred to as "measurement". The radio link monitoring includes measuring radio quality (more specifically, SIR (Signal-to-Interference Ratio)) of reference signals in a serving cell, determining whether the SIR is above a predetermined threshold, and determining that the serving cell is in out-of-synchronization when the SIR is below the predetermined threshold. The processing associated with cell search, measurement, and radio link monitoring and their performance definitions are described in non-patent documents 2 and 3, for example.

In order to address the problem of power consumption, it is considered that control of activation/de-activation is applied in the secondary component carrier, for example. For example, on a secondary component carrier in a de-activation state, the mobile station UE does not perform usual data transmission and reception and reduces the frequencies of cell search, measurement, and radio link monitoring, thereby saving the battery. The processing of de-activation on a secondary component carrier is performed when the amount of data to be communicated is small, for example.

In addition, in the LTE system, a measurement gap is defined in order to perform measurement on a carrier with a different frequency or a carrier for a different radio communication system (non-patent document 4). The length of the measurement gap is defined as 6 ms and its periodicity is defined as 40 ms or 80 ms, for example. During the measurement gap, the mobile station UE suspends communications in a serving cell and performs measurement of a carrier of a different frequency or a carrier of a different radio communication system. In this case, communication with the serving cell is stopped, throughput of communication with the serving cell deteriorates.

### [Prior art documents]

[Non-patent document 1] 3GPP TS36.913(V8.0.1)
[Non-patent document 2] 3GPP TS36.213 V8.8.0(2009-09)
[Non-patent document 3] 3GPP TS36.133 V8.7.0(2009-09)
[Non-patent document 4] 3GPP TS36.331 V8.8.0(2009-12)

### SUMMARY OF THE INVENTION

### PROBLEM TO BE SOLVED BY THE INVENTION

As described above, when carrier aggregation is applied, it is considered that deactivation is applied in a secondary component carrier.

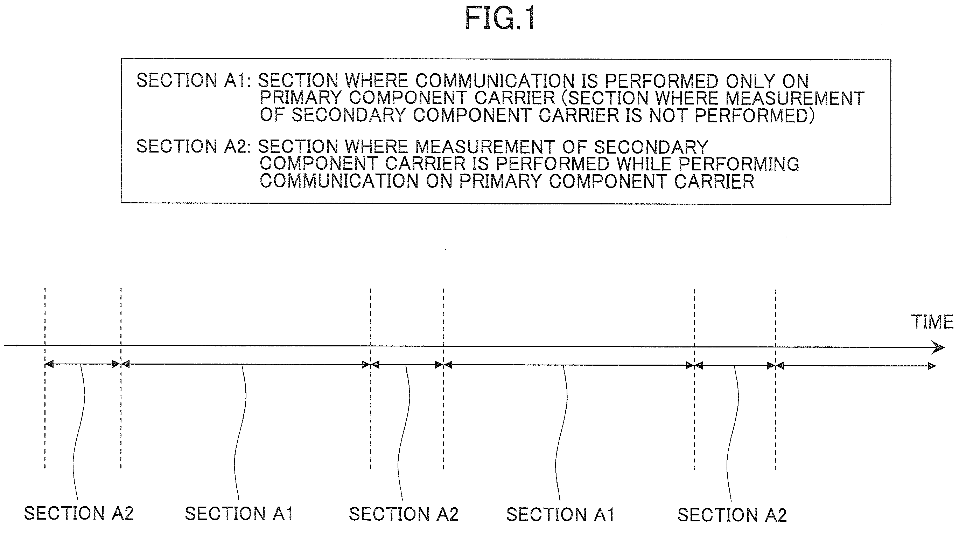

In this case, as shown in Fig. 1, a mobile station UE performs communications only on a primary component carrier in an ordinary state (section A1). Only when the mobile station UE performs cell search, measurement, or radio link monitoring (section A2) on a secondary component channel, the mobile station UE performs communications on both of the primary component carrier and the secondary component carrier.

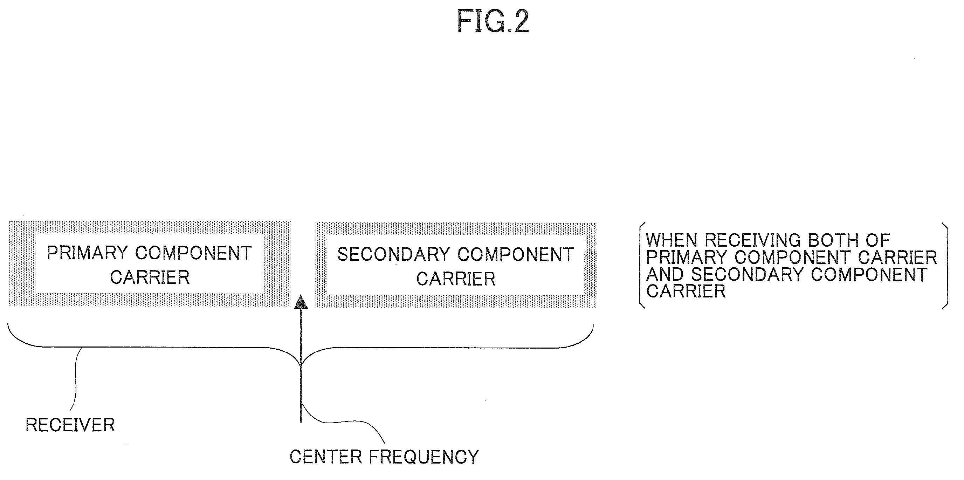

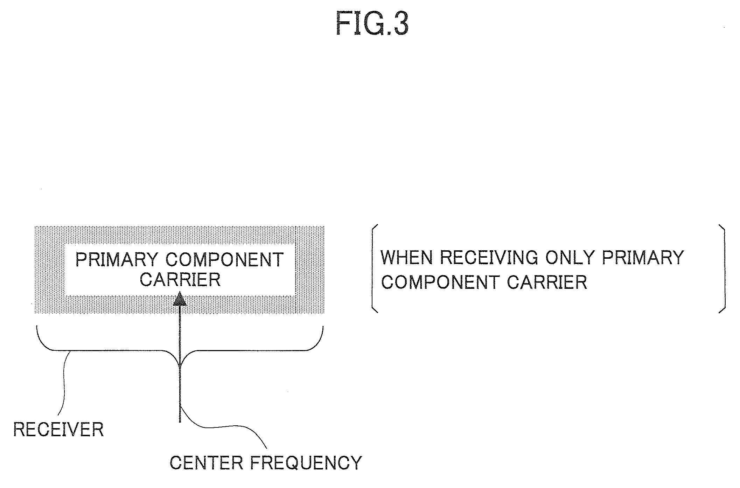

However, as shown in Figs. 2 and 3, the mobile station UE needs to change the center frequency of the receiver between the case where the mobile station UE performs communications only with the primary component carrier and the case where the mobile station UE performs communications with both of the primary component carrier and the secondary component carrier, for example. As a result, at the time of the change between the case where the mobile station UE performs communications only on the primary component carrier and the case where the mobile station UE performs communications on both of the primary component carrier and the secondary component carrier, a problem arises that the mobile station UE cannot transmit and receive data on the primary component carrier. For example, the state in which the mobile station UE cannot transmit and receive data may include a state in which data to be transmitted and received are lost.

In other words, when the mobile station UE receives plural component carriers using a single receiver, the change of the center frequency of the receiver occurs when the number of component carriers to be received changes, for example. As a result, the mobile station UE cannot transmit and receive data at the time of the change.

Since the time when the mobile station UE performs cell search, measurement, or radio link monitoring typically depends on the implementation of the mobile station UE, the radio base station eNB cannot recognize when data are lost.

In order to solve the above-mentioned problem, it may be considered to set the abovementioned measurement gap in the primary component carrier and to perform measurement of the secondary component carrier in the measurement gap. However, in this case, since communication using the primary component carrier cannot be performed in the measurement gap, there is a problem in that throughput of the primary component carrier deteriorates.

The present invention is contrived in view of the problem as described above, and an object of the present invention is to provide a mobile station, a radio base station, and a communication control method for making a system more efficient and achieving stability of connections, by saving a battery when carrier aggregation is applied while appropriately performing cell search, measurement, or the like on each component carrier.

The following further prior art documents disclose technological background for the present invention:
- D1: US 2009/270103 A1 (PANI DIANA [CA] ET AL) 29 October 2009 (2009-10-29)
- D2: ERICSSON ET AL: "Summary of the email discussion [68#23] LTE: CC activation / deactivation", 3GPP DRAFT; R2-100079 SUMMARY OF THE EMAIL DISCUSSION 68-23 LTE CC ACTIVATION DEACTIVATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118 - 20100122, 11 January 2010 (2010-01-11), XP050604907, [retrieved on 2010-01-11]

Document D1 discloses that during carrier aggregation a main receiver receives a main carrier and a supplementary receiver receives a second or supplementary carrier. The mobile station can decide to use the supplementary receiver to make measurements during certain measurement occasions. If the base station is made aware that a mobile station does not use the measurement occasions on the main carrier, the need for the base station to use a discontinuous reception during these periods is eliminated.

Document D2 discusses whether a mobile station with a deactivated downlink component carrier is required to maintain a downlink synchronisation on a de-activated component carrier. Document D2 also discusses whether a UE is required to perform measurements on an activated carrier. A UE can be required to support the CQI measurements on any activated downlink component carrier. Whilst document D2 does discuss a deactivation and activation of downlink component carriers and certain functionalities in connection therewith, neither document D1 nor document D2 discuss the activation and deactivation in connection with a measurement gap, as discussed above.
NOKIA ET AL: "Need for measurement gaps with carrier aggregation", 3GPP DRAFT; R4-101386, 3RD GENERATION PARTNERSHIP PROJECT (3GPP), vol. RAN WG4, no. Dublin; 9 April 2010, refers to the need for measurement gaps with carrier aggregation. Here, it is mentioned that RAN2 agreed that activated component carriers can be measured without measurement gaps since UE is anyway monitoring these carriers. Further, this document considers contiguous carrier aggregation and mentions that when two adjacent carriers are configured for carrier aggregation, a single RF can be used for reception of these carriers.
HUAWEI: "Further discussion on measurement in CA", 3GPP DRAFT; R4-101375, 3RD GENERATION PARTNERSHIP PROJECT (3GPP), vol. RAN WG4, no. Dublin, 9 April 2010, presents considerations on the impact of carrier aggregation on mobility measurement requirements. This document mentions that RAN4 has agreed that UE would be able to perform mobility measurement on each activated carrier without measurement gaps. This document suggests that if there are unused RF chains, the measurements on the deactivated carrier can be performed without gaps. Further, this document discloses that when two contiguous carriers are configured for carrier aggregations, a single RF can be used for reception of these carriers.

### MEANS FOR SOLVING THE PROBLEM

A mobile station of the present invention is a mobile station according to claim 1.

A communication control method of the present invention is a communication control method in a mobile station according to claim 6.

A radio base station of the present invention is a radio base station according to claim 7.

A communication control method of the present invention is a communication control method in a radio base station according to claim 9.

### EFFECT OF THE PRESENT INVENTION

According to the present invention, it becomes possible to provide a mobile station, a radio base station, and a communication control method for making a system more efficient and achieving stability of connections, by saving a battery when carrier aggregation is applied while appropriately performing cell search, measurement, or the like on each component carrier.

### BRIEF DESCRIPTION OF THE DRAWINGS

Fig. 1 is a diagram for explaining operation for measuring a secondary component carrier in a de-activated state in a conventional mobile communication system;
Fig. 2 is a diagram showing a center frequency of a receiver when both of a primary component carrier and a secondary component carrier are received;
Fig. 3 is a diagram showing a center frequency of a receiver when only a primary component carrier is received;
Fig. 4 is a diagram for explaining component carriers in a mobile communication system in accordance with an embodiment of the present invention;
Fig. 5 is a diagram for explaining operations of a mobile station and a radio base station in accordance with an embodiment of the present invention (in a case where one gap section is used);
Fig. 6 is a diagram for explaining operations of a mobile station and a radio base station in accordance with an embodiment of the present invention (in a case where two gap sections are used);
Fig. 7 is a diagram for explaining a measurement gap formed by two gap sections in accordance with an embodiment of the present invention;
Fig. 8 is a diagram for explaining a measurement gap formed by two gap sections in accordance with an embodiment of the present invention;
Fig. 9 is a diagram for explaining a measurement gap formed by two gap sections in accordance with an embodiment of the present invention;
Fig. 10 is a block diagram of a mobile station in accordance with an embodiment of the present invention;
Fig. 11 is a block diagram of a radio base station in accordance with an embodiment of the present invention;
Fig. 12 is a flowchart of a communication control method in a mobile station in accordance with an embodiment of the present invention;
Fig. 13 is a flowchart of a communication control method in a radio base station in accordance with an embodiment of the present invention;
Fig. 14 is a diagram for explaining a measurement gap formed by two gap sections in accordance with an embodiment of the present invention;
Fig. 15 is a diagram showing a communication control method in a mobile station UE; and
Fig. 16 is a diagram showing a communication control method in a radio base station eNB.

### EMBODIMENTS FOR CARRYING OUT THE INVENTION

### <Configuration of a mobile communication system in accordance with a first embodiment of the present invention>

A mobile communication system in accordance with a first embodiment of the present invention is described below with reference to the accompanying drawings. Throughout the figures for illustrating the embodiments of the present invention, the same reference numerals are used for the same or equivalent elements and their repeated descriptions may be omitted.

For example, the mobile communication system in accordance with this embodiment is an LTE-advanced system. In other words, the mobile communication system in accordance with this embodiment includes a radio base station eNB and a mobile station UE for communicating with the radio base station eNB, and the radio base station eNB and the mobile station UE perform communications according to the LTE-Advanced scheme. The mobile station UE may be also referred to as a user apparatus.

Communication channels used in the mobile communication system in accordance with this embodiment are described below.

In the mobile communication system in accordance with this embodiment, a PDSCH (Physical Downlink Shared Channel) shared by mobile stations UE and a PDCCH (Physical Downlink Control Channel) are used in downlink.

User data (i.e. typical data signals) are transmitted via the PDSCH.

Control signals such as an ID of a mobile station UE for performing communications using the PDSCH and transport format information of user data (i.e. downlink scheduling information) as well as an ID of a mobile station UE for performing communications using a PUSCH (Physical Uplink Shared Channel) and transport format information of user data (i.e. uplink scheduling grant) are transmitted via the PDCCH.

The PDCCH may be also referred to as a "Downlink L1/L2 Control Channel". The downlink scheduling information and the uplink scheduling grant may be collectively referred to as "downlink control information (DCI)".

In downlink, broadcast information is mapped to a BCCH (Broadcast Control Channel) as a logical channel and transmitted.

Part of information to be transmitted via the BCCH is mapped to a BCH (Broadcast Channel) as a transport channel. Information mapped to the BCH is transmitted to mobile stations UE within the corresponding cell via a P-BCH (Physical Broadcast Channel) as a physical channel.

Part of information to be transmitted via the BCCH is also mapped to a DL-SCH (Downlink Shared Channel) as a transport channel. Information mapped to the DL-SCH is transmitted to mobile stations UE within the corresponding cell via the PDSCH as a physical channel.

In the mobile communication system in accordance with this embodiment, a PUSCH (Physical Uplink Shared Channel) shared by mobile stations UE and a PUCCH (Physical Uplink Control Channel) are used in uplink.

User data (i.e. typical data signals) are transmitted via the PUSCH.

Downlink quality information (CQI: Channel Quality Indicator) used for scheduling processing and for AMCS (Adaptive Modulation and Coding Scheme) of the PDSCH, and acknowledgement information for the PDSCH are transmitted via the PUCCH.

The downlink quality information may be also referred to as a "CSI (Channel State Indicator)", which is an indicator collectively representing a CQI, a PMI (Pre-coding Matrix Indicator), and a RI (Rank Indicator).

The acknowledgement information is expressed as either ACK (Acknowledgement) indicating that a transmission signal is successfully received or NACK (Negative Acknowledgement) indicating that a transmission signal is not successfully received.

When carrier aggregation as described below is applied, operations in the communication channels used in the mobile communicate system in accordance with this embodiment may be performed in a single component carrier or across plural component carriers. For example, downlink scheduling information may be transmitted by one component carrier, and a physical downlink shared channel corresponding to this downlink scheduling information may be transmitted by another component carrier. Alternatively, an uplink scheduling grant may be transmitted by one component carrier and a physical uplink shared channel corresponding to this uplink scheduling grant may be transmitted by another component carrier. Such a scheduling may be referred to as cross-carrier scheduling.

In the LTE-Advanced system, carrier aggregation may be applied. In other words, communications in uplink or downlink are performed using plural component carriers.

A component carrier corresponds to a single system carrier in the LTE system. In the LTE system, communications are performed on a single component carrier. In the LTE-Advanced system, on the other hand, communications may be performed on two or more component carriers.

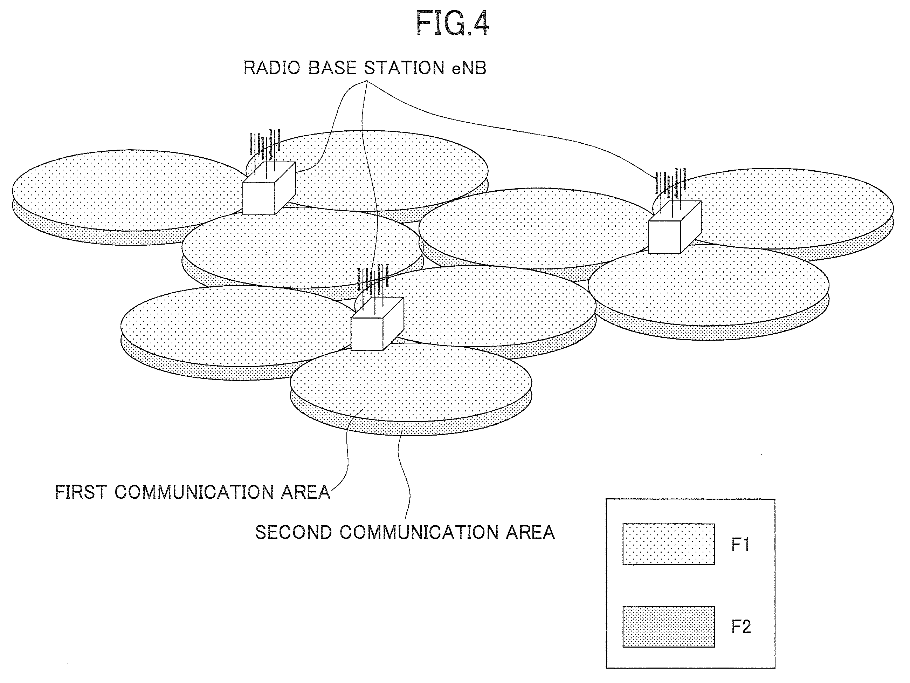

For example, as shown in Fig. 4, a cell (first communication area) in which a first component carrier (F1 in Fig. 4) is used geographically overlaps with a cell (second communication area) in which a second component carrier (F2 in Fig. 4) is used in the mobile communication system in accordance with this embodiment. Although Fig. 4 shows that the first communication area almost coincides with the second communication area, the first communication area may at least partially overlap with the second communication area.

Although not shown in Fig. 4, a third component carrier may be used in addition to the first component carrier and the second component carrier. Alternatively, four or more component carriers may be used.

In the following description, it is assumed that carrier aggregation is applied using a first component carrier (hereinafter referred to as a "first carrier") and a second component carrier (hereinafter referred to as a "second carrier").

Also, the first carrier is the primary component carrier, and the second carrier is the secondary component carrier. The primary component carrier is the most important component carrier among plural component carriers. The primary component carrier is a carrier in which there is not a de-activated state. That is, the primary component carrier is a carrier that is always activated.

The second carrier is the secondary component carrier, in which there are a de-activated state and an activated state. That is, in the second carrier, there are a non-activated state and an activated state.

In general, the number of the primary component carrier is one, and the number of the secondary component carrier(s) may be one or may be equal to or greater than two.

When the second carrier is not activated, that is, when the second carrier is in a deactivated state, data transmission and reception on the second carrier is not performed basically, and cell search, measurement or radio link monitoring is performed at a reduced frequency. The radio link monitoring may be performed or may not be performed. In this case, battery saving in the mobile station UE is realized since the mobile station UE can reduce load of processing for the second carrier, that is, load of processing of cell search, measurement, or radio link monitoring.

On the other hand, when the second carrier is activated, that is, when the mobile station UE is in an activated state, data transmission and reception are performed on the second carrier, and cell search, measurement or radio link monitoring are performed at a proper frequency. The proper frequency may be a frequency necessary for properly performing handover in the second carrier, for example.

Next, operation of the mobile station and the radio base station in accordance with the present embodiment is described. More specifically, operation of communications in the first carrier and the second carrier, and operation of cell search, measurement or radio link monitoring are described in a case where there are the first carrier that is the primary component carrier and the second carrier that is the secondary component carrier, and a measurement gap for measurement of the second carrier is set. As for the second carrier, there are a case where the second carrier is in an activated state and a case where the second carrier is in a de-activated state. In the operation of the mobile station and the radio base station in accordance with the present embodiment, the measurement gap for measuring the second carrier is applied only when the second carrier is in a deactivated state, and the measurement gap is not applied when the second carrier is in an activated state. Details of the measurement gap are described below.

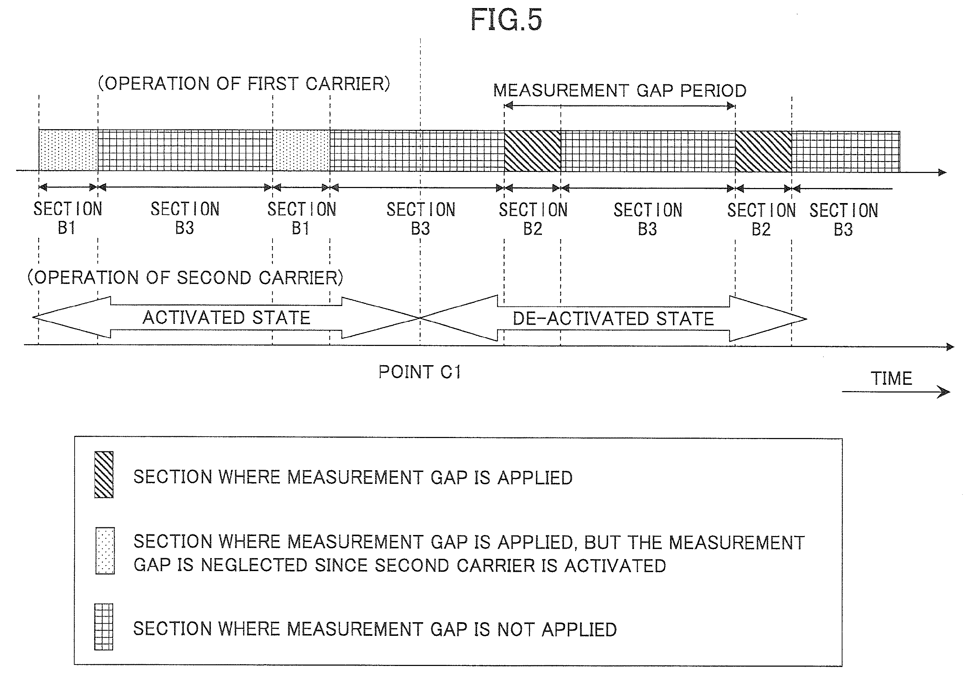

In Fig. 5, the second carrier is in an activated state during a period until point C1, and the second carrier is in a de-activated state after the point C1. A measurement gap is defined in the first carrier for measuring the second carrier. More specifically, each of the section B1 and the section B2 is a section defined as the measurement gap. The section B1 is a section where the second carrier is in an activated state and the measurement gap is applied. The section B2 is a section where the second carrier is in a de-activated state and the measurement gap is applied. The section B3 is a section in which the measurement gap is not applied.

As mentioned above, the measurement gap is a gap section for measuring a carrier of a different frequency or a carrier of a different mobile communication system, for example. The size may be a value of 6 ms, for example. The size of the measurement gap may be a value greater than 6 ms, such as 8 ms and 9 ms. Also, the period of the measurement gap may be a value of 40 ms or 80 ms, for example. Or, the period of the measurement gap may be a value, other than the 40 ms and 80 ms, such as 20 ms and 1280 ms, for example. As long as timings of gap sections agrees with each other between the radio base station eNB and the mobile station UE, any pattern or any form of measurement gaps may be set.

In a case where the second carrier is in an activated state, that is, in a case where the second carrier is activated, the mobile station UE and the radio base station eNB perform communication of the first carrier without consideration of the measurement gap (section B1). That is, when the second carrier is activated, the mobile station UE and the radio base station eNB perform commemoration of the first carrier even in the measurement gap that is for measuring the second carrier.

Communication of the first carrier in the mobile station UE may include processing for receiving a downlink signal in downlink, and may include processing for transmitting an uplink signal in uplink, for example. Also, communication of the first carrier in the mobile station UE may include cell search, measurement, and radio link monitoring for the first carrier. Communication of the first carrier in the radio base station eNB may include processing for transmitting a downlink signal in downlink, and may include processing for receiving an uplink signal in uplink.

On the other hand, in a case where the second carrier is in a de-activated state, that is, in a case where the second carrier is not activated, the mobile station UE and the radio base station eNB do not perform communication of the first carrier considering the measurement gap (section B2). That is, when the second carrier is not activated, the mobile station UE and the radio base station eNB do not perform communication of the first carrier in the measurement gap that is for measuring the second carrier.

Also, in a case where the second carrier is in an activated state, that is, in a case where the second carrier is activated, the mobile station UE may perform measurement of the second carrier, that is, may perform cell search, measurement, or radio link monitoring without consideration of the measurement gap (section B1). To perform measurement of the second carrier without consideration of the measurement gap (section B1) may mean to perform measurement of the second carrier in an arbitrary timing in the section B1 or the section B3.

On the other hand, in a case where the second carrier is in a de-activated state, that is, in a case where the second carrier is not activated, the mobile station UE may perform measurement of the second carrier, that is, may perform cell search, measurement, or radio link monitoring in the measurement gap (section B2).

In a section (section B3) where the measurement gap is not applied, the mobile station UE and the radio base station eNB may perform communication of the first carrier irrespective of whether the second carrier is in an activated state or in a de-activated state.

As mentioned above, although the section B1 is set as a measurement gap in terms of signaling, the section B1 may be regarded as a section where the measurement gap is not applied since the second carrier is in an activated state. Or, the section B1 may be regarded as a section that is not set as a measurement gap in terms of signaling since the measurement gap for measuring the second carrier is applied only when the second carrier is in a deactivated state. In the latter case, the section B1 may be regarded as a measurement gap that is set when the second carrier is assumed to be in a deactivated state.

Effects of the present embodiment are described in the following.

In a case where the second carrier is in an activated state, a receiver of the mobile station UE is in a state shown in Fig. 2, so that the mobile station UE can receive both of the signals of the first carrier and the second carrier at the same time. In this case, it becomes possible that the mobile station UE performs measurement of the second carrier without a measurement gap for measuring the second carrier, so that the measurement gap can be neglected. Thus, in a case where the second carrier is in an activated state, the mobile station UE and the radio base station eNB perform communication of the first carrier by neglecting the measurement gap for measuring the second carrier, so that it becomes possible to avoid deterioration of throughput of the first carrier due to a measurement gap.

On the other hand, in a case where the second carrier is in a de-activated state, a receiver of the mobile station UE is basically in a state of Fig. 3, so that the mobile station UE can receive only a signal of the first carrier. In this case, the mobile station UE performs measurement of the second carrier using a measurement gap for measuring the second carrier, and, the mobile station UE and the radio base station eNB stop communication of the first carrier. Accordingly, a predetermined measurement gap is set between the mobile station UE and the radio base station eNB. In the measurement gap, the mobile station UE performs measurement of the second carrier, and the mobile station UE and the radio base station eNB do not perform communication of the first carrier, so that it becomes possible to avoid an above-mentioned event that data to be transmitted and received by the mobile station UE is lost in the mobile station UE.

To wrap up, according to the present embodiment, in a state where a measurement gap is set for measuring the second carrier that is the secondary component carrier, when the secondary component carrier is activated, deterioration of throughput due to the measurement gap can be avoided by neglecting the measurement gap. On the other hand, when the secondary component carrier is not activated, by performing measurement of the second carrier while stopping communication of the first carrier in consideration of the measurement gap, it becomes possible to avoid an event in which data to be transmitted and received by the mobile station UE is lost in the mobile station UE.

Although transition between the activated state and the de-activated state is performed in the MAC layer in order to perform control more quickly, setting of the measurement gap is performed in the RRC layer that is an upper layer of the MAC layer. Thus, if the measurement gap is set or released according to the transition between the activated state and the de-activated state, the advantage of control in the MAC layer in which control is performed quickly is lost. That is, it is necessary that the setting of the measurement gap is performed irrespective of the activated state or the deactivated state. In other words, according to the mobile station and the radio base station apparatus of the present embodiment, it becomes possible to control whether to use the measurement gap without setting a measurement gap in the RRC layer, so that it becomes possible to perform proper measurement while maintaining the advantage of the activation/de-activation control in which control is performed quickly in the MAC layer.

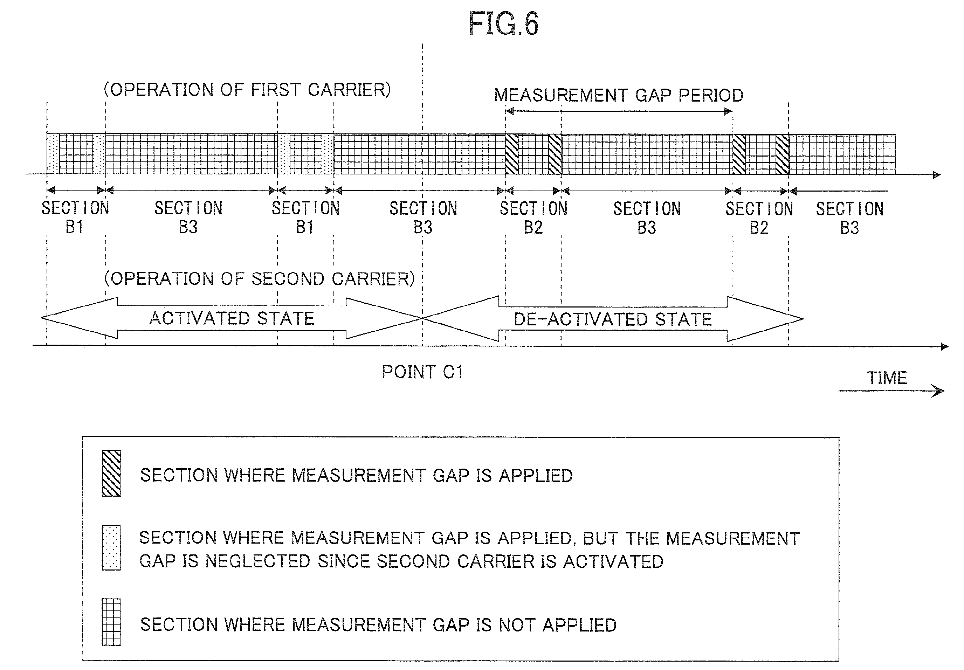

In the example of Fig. 5, although a periodic gap of a predetermined length is applied as the measurement gap, instead of this, periodic gaps of two divided gap sections may be applied as the measurement gap as shown in Fig. 6. The section between the two gap sections is a section in which no measurement gap is applied, that is, the section between the two gap sections is a section similar to the section B3 shown in Fig. 5. The size of each of the two gap sections may be 2 ms, for example. Or, the size of each of the two gap sections may be a value other than 2 ms.

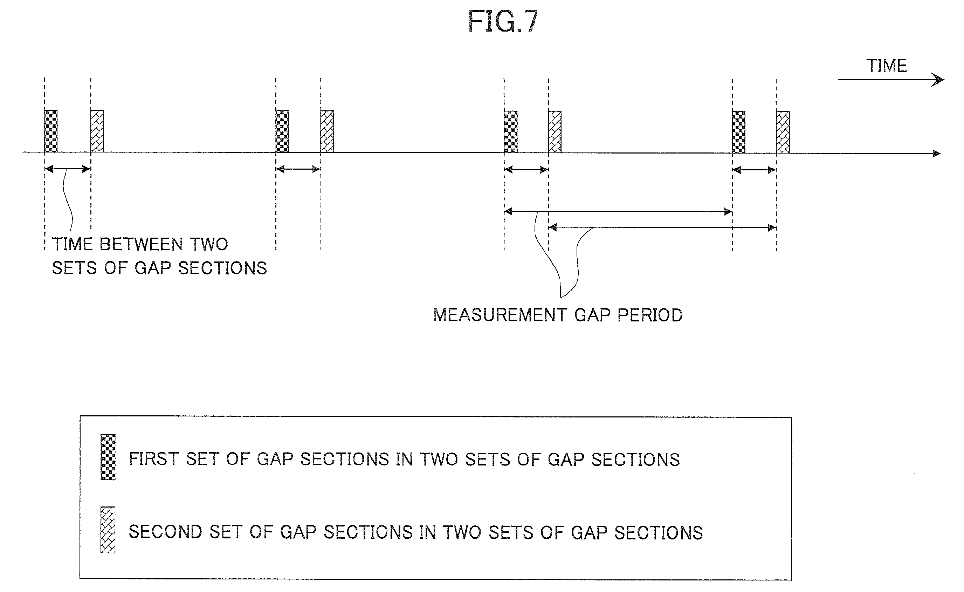

The measurement gap shown in Fig. 6 may be represented as a measurement gap in which two sets of gap sections having the same period are set and a time between gap sections of the two sets is constant as shown in Fig. 7.

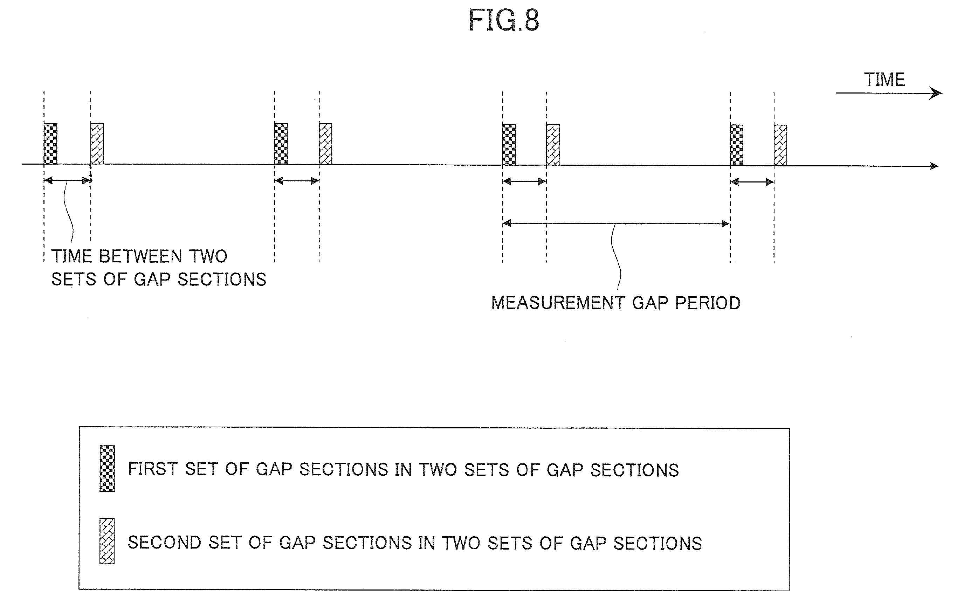

Or, the measurement gap shown in Fig. 6 may be represented as a measurement gap including two gap sections separated by a predetermined time as shown in Fig. 8. In this case, the measurement gap including the two gap sections separated by the constant time may be provided at a constant period like a normal measurement gap.

As mentioned above, when the receiver of the mobile station UE changes from the state of Fig. 2 to the state of Fig. 3, or changes from the state of Fig. 3 to the state of Fig. 2, it is necessary to stop communication of the first carrier and the second carrier. That is, the mobile station UE needs to stop communication on the first carrier and the second carrier only in a section of transition between a state where the mobile station UE performs communication only on the first carrier and a state where the mobile station UE performs communication on both of the first carrier and the second carrier. In other words, in a center section of the section B2 shown in Fig. 5, the mobile station UE can receive signals of both of the first carrier and the second carrier. Thus, it is not necessary to define the center section as a measurement gap. Therefore, as shown in Figs. 6-8, a measurement gap is divided into two gap sections and the section between two gap sections is not set as a measurement gap, so that sections where communication of the first carrier is stopped can be decreased. As a result, it becomes possible to improve throughput of communication of the first carrier.

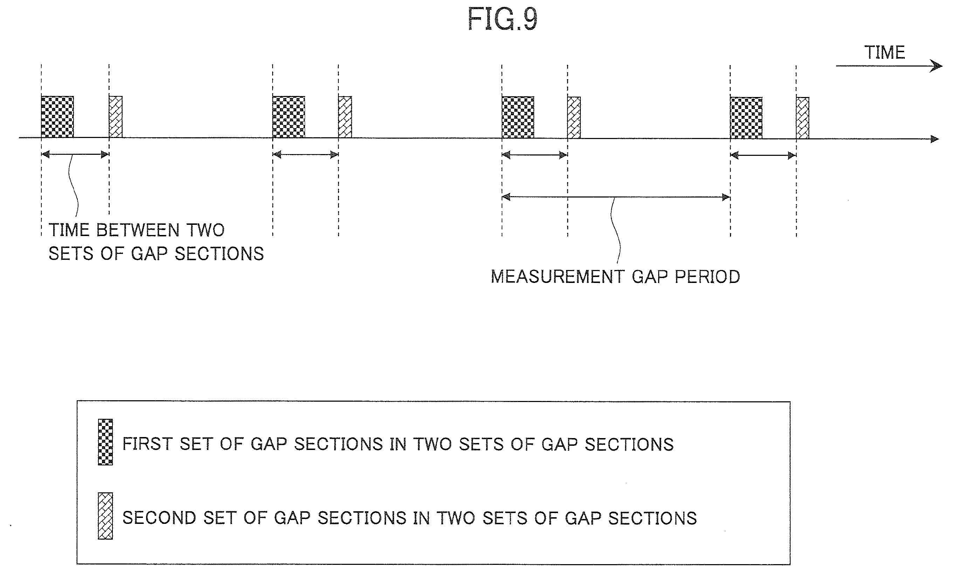

In the separated two gap sections shown in Figs. 6-8, the size of the temporally first gap section may be greater than the size of the temporally second gap section as shown in Fig. 9. Effects by setting the size of the temporally first gap section to be greater than the size of the temporally second gap section will be described later.

More specifically, the temporally first gap section and the temporally second gap section may be 6 ms and 1 ms, respectively, for example. Or, the temporally first gap section and the temporally second gap section may be 4 ms and 2 ms, respectively, for example. Or, the sizes may be other values as long as the size of the temporally first gap section is greater than the size of the temporally second gap section.

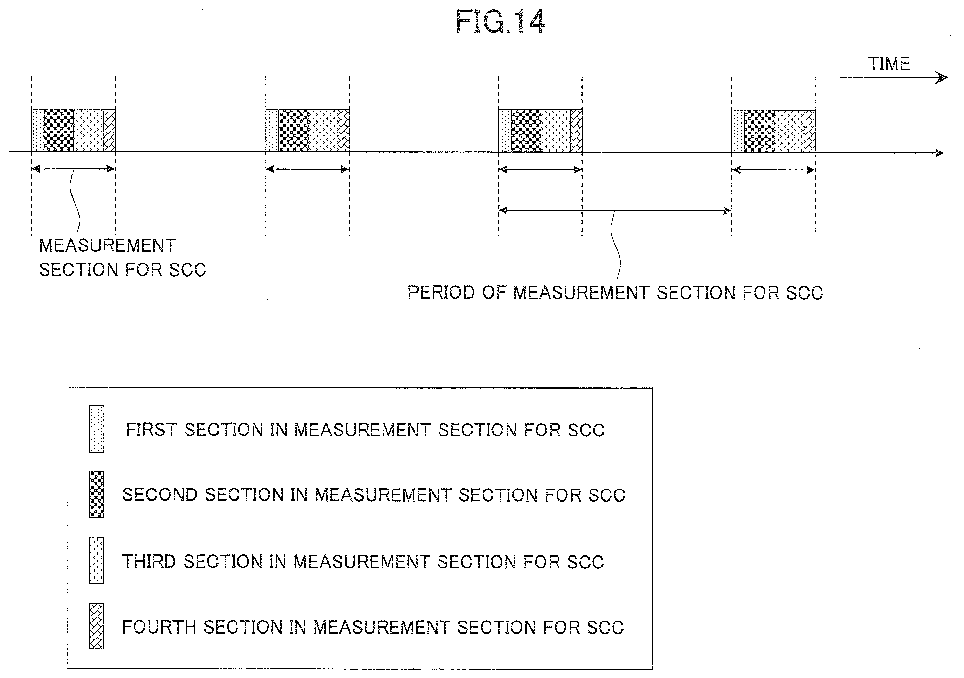

In the example shown in Fig. 5, a constant length of gap is periodically applied as a measurement gap. Instead of that, as shown in Fig. 14, a measurement section for SCC (Secondary Component Carrier) including four sections may be applied. The four sections may be called a first section, a second section, a third section and a fourth section from the top in terms of time. Similar to the measurement gap for measuring the second carrier shown in Figs. 5 and 6, the measurement section for SCC is applied only when the second carrier is in a de-activated state, and the measurement section for SCC is not applied when the second carrier is in an activated state. That is, in this case, the measurement section for SCC is neglected.

For example, sizes of the first section, the second section, the third section and the fourth section may be 2 ms, 4 ms, 5 ms and 2 ms, respectively. Or, sizes of the first section, the second section, the third section and the fourth section may be values other than the above-mentioned values.

The first section and the fourth section of the measurement section for SCC are equivalent to the divided two gap sections of Figs. 6-9. That is, the first section and the fourth section are regarded as times when a receiver of the mobile station UE performs switching of a center frequency and the like, so that communication of the first carrier is not performed. That is, each of the first section and the fourth section is regarded as a measurement gap, and communication of the first carrier is not performed. That is, in the first section and the fourth section, the radio base station eNB and the mobile station UE do not perform communication of the first carrier. In addition, for similar reasons, communication of the second carrier is not performed in the first section and the fourth section.

For the first carrier, the second section and the third section of the measurement section for SCC are equivalent to the section between the divided two gap sections of Figs. 6-9. In this case, in each of the second section and the third section, the receiver of the mobile station UE is in a state of Fig. 2, so that communication of the first carrier is performed. That is, in the second section and the third section, the radio base station eNB and the mobile station UE perform communication of the first carrier. That is, each of the second section and the third section is not a measurement gap for the first carrier, and is regarded as a normal section, so that communication of the first carrier is performed.

Also for the second carrier, the second section and the third section of the measurement section for SCC are equivalent to the section between the divided two gap sections of Figs. 6-9. However, in a case where the second carrier is in a de-activated state, the mobile station UE performs measurement on the second carrier with low frequency, that is, performs cell search, measurement, and measurement for path loss of the serving cell, for example, with low frequency. Thus, it is desirable that the mobile station UE performs measurement on the second carrier again before starting communication so as to improve accuracy of the measurement and improve quality of communication. Therefore, in the second section of the measurement section for SCC, operation may be adopted in which the mobile station UE performs measurement of the second carrier, and communication of the second carrier is not performed between the mobile station UE and the radio base station eNB. That is, in the second section, the radio base station eNB and the mobile station UE do not perform communication of the second carrier. Then, in the third section of the measurement section for SCC, communication of the second carrier is performed. That is, in the third section, the radio base station eNB and the mobile station UE performs communication of the second carrier. The mobile station UE may perform measurement of the second carrier also in the third section of the measurement section for SCC.

That is, in the second section of the measurement section for SCC, the mobile station UE performs cell search or measurement of the second carrier, and measurement of path loss, and the mobile station UE does not perform either uplink transmission or downlink reception on the second carrier. Then, the mobile station UE performs uplink transmission and downlink reception on the second carrier in the third section of the measurement section for SCC. Also, in the second section of the measurement section for SCC, the radio base station eNB does not perform either uplink reception or downlink transmission on the second carrier, and the radio base station eNB performs uplink reception and downlink transmission on the second carrier in the third section of the measurement section for SCC.

Since measurement of path loss and the like is unnecessary for downlink communication, the downlink communication may be performed in both of the second section and the third section. In this case, in the second section, only uplink communication is not performed. That is, in the second section of the measurement section for SCC, the mobile station UE performs cell search or measurement of the second carrier, and measurement of path loss, and performs downlink reception, and the mobile station UE does not perform uplink transmission on the second carrier. Then, in the third section of the measurement section for SCC, the mobile station UE performs both of uplink transmission and downlink reception on the second carrier. Also, in the second section of the measurement section for SCC, the radio base station eNB performs downlink transmission in the second carrier, but does not perform uplink reception. In the third section of the measurement section for SCC, the radio base station eNB performs both of uplink reception and downlink transmission on the second carrier.

The operation of the mobile station UE and the radio base station eNB related to measurement gap of the present embodiment described with reference to Figs. 5-9 and 14 is applied only when the first carrier and the second carrier belong to the same frequency band, and may not be applied when the first carrier and the second carrier belong to different frequency bands.

In general, in a case where the first carrier and the second carrier belong to different frequency bands, the mobile station UE has respective receivers for the first carrier and the second carrier. Thus, switching of the center frequency and the like shown in Figs. 2 and 3 does not occur, so that loss of data due to the switching does not occur. Thus, in the case where the first carrier and the second carrier belong to different frequency bands, the above-mentioned operation of the mobile station UE and the radio base station eNB related to measurement gap of the present embodiment becomes unnecessary. In other words, only when the first carrier and the second carrier belong to the same frequency band, the mobile station UE and the radio base station eNB set a measurement gap, and only when the second carrier is in a de-activated state, the mobile station UE and the radio base station eNB regard that the measurement gap exists, and when the second carrier is in an activated state, the mobile station UE and the radio base station eNB regard that the measurement gap does not exist. In a case where the first carrier and the second carrier belong to different frequency bands, the mobile station UE and the radio base station eNB do not set the measurement gap. In this case, when the first carrier and the second carrier belong to different frequency bands, it becomes possible that the mobile station UE performs measurement of the second carrier at an arbitrary timing. As a result, it becomes possible to perform measurement processing more flexibly.

In addition, in a case where there are plural secondary carriers, the section B1 and the section B2 shown in Figs. 5 and 6 or the measurement section for SCC may be set in the same time among the plural secondary carriers (second carriers in the example shown in the above-mentioned figures).

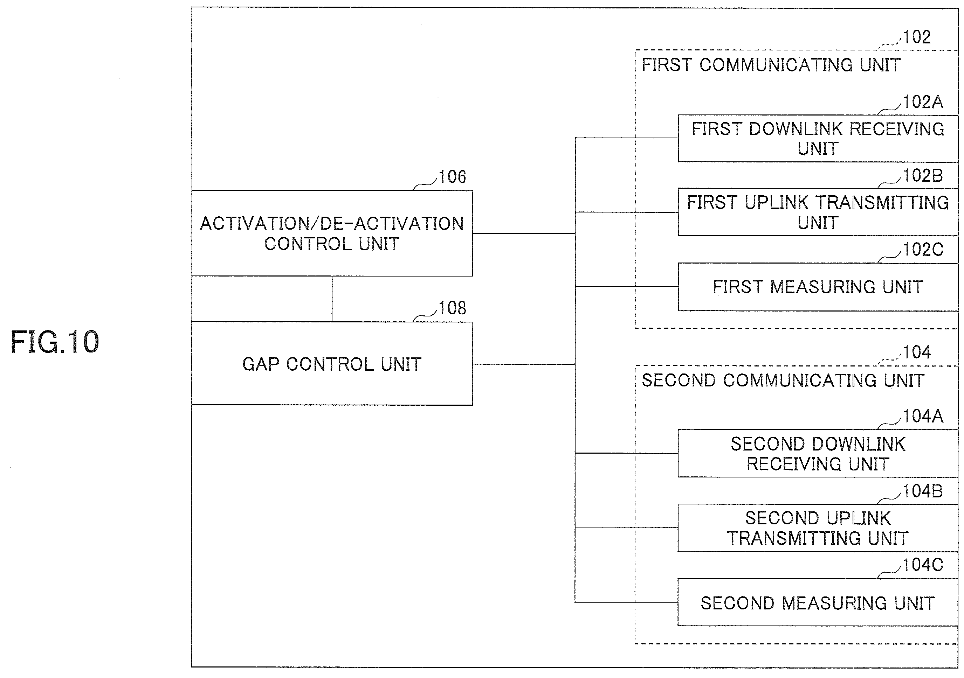

As shown in Fig. 10, the mobile station UE includes a first communicating unit 102, a second communicating unit 104, an activation/de-activation control unit 106, and a gap control unit 108. The first communicating unit 102 includes a first downlink receiving unit 102A, a first uplink transmitting unit 102B, and a first measuring unit 102C. The second communicating unit 104 includes a second downlink receiving unit 104A, a second uplink transmitting unit 104B, and a second measuring unit 104C.

It should be noted that Fig. 10 shows functional units associated with baseband processing in the mobile station UE, but does not show functional units associated with RF (radio frequency) processing in the mobile station UE. Since the receiver shown in Fig. 2 or 3 is included in functional units associated with RF processing, these units are not shown in Fig. 10. The configuration of the mobile station UE in accordance with this embodiment can be used regardless of the functional units associated with RF processing.

The first communicating unit 102, the first downlink receiving unit 102A, the first uplink transmitting unit 102B, the first measuring unit 102C, the second communicating unit 104, the second downlink receiving unit 104A, the second uplink transmitting unit 104B, the second measuring unit 104C, the activation/de-activation control unit 106, and the gap control unit 108 are connected with each other.

The first communicating unit 102 performs communications related to the first carrier. For example, the first communicating unit 102 performs downlink reception and uplink transmission on the first carrier, and cell search, measurement, radio link monitoring, or the like on the first carrier.

In the following, operation of the first communicating unit 102 is described in a case where the measurement gap shown in Figs. 5 and 6 is set. When the second carrier is in an activated state, that is, when the second carrier is activated, the first communicating unit 102 performs communication of the first carrier without consideration of the measurement gap (section B1). That is, when the second carrier is activated, the first communicating unit 102 performs communication of the first carrier even in the measurement gap for measuring the second carrier.

Also, in a case where the second carrier is in a de-activated state, that is, in a case where the second carrier is not activated, the first communicating unit 102 does not perform communication of the first carrier in consideration of the measurement gap (section B2). That is, when the second carrier is not activated, the first communicating unit 102 does not perform communication of the first carrier in the measurement gap for measuring the second carrier.

In the following, operation of the first communicating unit 102 is described in a case where the measurement gap for SCC shown in Fig. 14 is set.

In a case where the second carrier is in an activated state, that is, in a case where the second carrier is activated, the first communicating unit 102 performs communication of the first carrier without consideration of the measurement section for SCC. That is, in the case where the second carrier is activated, the first communicating unit 102 performs communication of the first carrier even in the first section, the second section, the third section and the fourth section in the measurement section for SCC.

In a case where the second carrier is in a de-activated state, that is, in a case where the second carrier is not activated, the first communicating unit 102 does not perform communication of the first carrier in the first section and the fourth section of the measurement section for SCC in consideration of the measurement section for SCC. That is, when the second carrier is not activated, the first communicating unit 102 does not perform communication of the first carrier in the first section and the fourth section in the measurement section for SCC. In a case where the second carrier is not activated, the first communicating unit 102 may perform communication of the first carrier in the second section and the third section in the measurement section for SCC.

The first downlink receiving unit 102A receives downlink signals on the first carrier. For example, the downlink signals may be the PDSCH or the PDCCH. Alternatively, the downlink signals may be a P-BCH as broadcast information, a PSS (Primary Synchronization Signal) or an SSS (Secondary Synchronization Signal) as synchronization signals, or downlink reference signals.

In the following, operation of the first downlink receiving unit 102A is described in a case where the measurement gap shown in Figs. 5 and 6 is set.

In a case where the second carrier is in an activated state, that is, in a case where the second carrier is activated, the first downlink receiving unit 102A performs downlink signal reception on the first carrier without consideration of the measurement gap (section B1). That is, when the second carrier is activated, the first downlink receiving unit 102A performs downlink signal reception on the first carrier even in the measurement gap for measuring the second carrier.

In a case where the second carrier is in a de-activated state, that is, in a case where the second carrier is not activated, the first downlink receiving unit 102A does not perform downlink signal reception on the first carrier in consideration of the measurement gap (section B2). That is, when the second carrier is not activated, the first downlink receiving unit 102A does not perform downlink signal reception on the first carrier in the measurement gap for measuring the second carrier.

In the following, operation of the first downlink receiving unit 102A is described in a case where the measurement gap for SCC shown in Fig. 14 is set.

In a case where the second carrier is in an activated state, that is, in a case where the second carrier is activated, the first downlink receiving unit 102A performs downlink signal reception on the first carrier without consideration of the measurement section for SCC. That is, in the case where the second carrier is activated, the first downlink receiving unit 102A performs downlink signal reception on the first carrier even in the first section, the second section, the third section and the fourth section in the measurement section for SCC.

In a case where the second carrier is in a de-activated state, that is, in a case where the second carrier is not activated, the first downlink receiving unit 102A does not perform downlink signal reception on the first carrier in the first section and the fourth section of the measurement section for SCC in consideration of the measurement section for SCC. That is, when the second carrier is not activated, the first downlink receiving unit 102A does not perform downlink signal reception on the first carrier in the first section and the fourth section in the measurement section for SCC. In a case where the second carrier is not activated, the first downlink receiving unit 102A may perform downlink signal reception on the first carrier in the second section and the third section in the measurement section for SCC.

The first uplink transmitting unit 102B transmits uplink signals on the first carrier. For example, the uplink signals may be the PUSCH or the PUCCH. Alternatively, the uplink signals may be sounding reference signals, demodulation reference signals, or signals on a random access channel.

In the following, operation of the first uplink transmitting unit 102B is described in a case where the measurement gap shown in Figs. 5 and 6 is set.

In a case where the second carrier is in an activated state, that is, in a case where the second carrier is activated, the first uplink transmitting unit 102B performs uplink signal reception without consideration of the measurement gap (section B1). That is, when the second carrier is activated, the first uplink transmitting unit 102B performs uplink signal transmission on the first carrier even in the measurement gap for measuring the second carrier.

In a case where the second carrier is in a de-activated state, that is, in a case where the second carrier is not activated, the first uplink transmitting unit 102B does not perform uplink signal transmission on the first carrier in consideration of the measurement gap (section B2). That is, when the second carrier is not activated, the first uplink transmitting unit 102B does not perform uplink signal transmission on the first carrier in the measurement gap for measuring the second carrier.

In the following, operation of the first uplink transmitting unit 102B is described in a case where the measurement gap for SCC shown in Fig. 14 is set.

In a case where the second carrier is in an activated state, that is, in a case where the second carrier is activated, the first uplink transmitting unit 102B performs uplink signal transmission on the first carrier without consideration of the measurement section for SCC. That is, in the case where the second carrier is activated, the first uplink transmitting unit 102B performs uplink signal transmission on the first carrier even in the first section, the second section, the third section and the fourth section in the measurement section for SCC.

In a case where the second carrier is in a de-activated state, that is, in a case where the second carrier is not activated, the first uplink transmitting unit 102B does not perform uplink signal transmission in consideration of the measurement section for SCC. That is, when the second carrier is not activated, the first uplink transmitting unit 102B does not perform uplink signal transmission on the first carrier in the first section and the fourth section in the measurement section for SCC. In a case where the second carrier is not activated, the first uplink transmitting unit 102B may perform uplink signal transmission on the first carrier in the second section and the third section in the measurement section for SCC.

The first measuring unit 102C performs measurement processing such as cell search, measurement, radio link monitoring or the like on the first carrier.

In the following, operation of the first measuring unit 102C is described in a case where the measurement gap shown in Figs. 5 and 6 is set.

In a case where the second carrier is in an activated state, that is, in a case where the second carrier is activated, the first measuring unit 102C performs measurement processing such as cell search, measurement, or radio link monitoring on the first carrier without consideration of the measurement gap (section B1). That is, when the second carrier is activated, the first measuring unit 102C performs measurement processing such as cell search, measurement, or radio link monitoring on the first carrier even in the measurement gap for measuring the second carrier.

In a case where the second carrier is in a de-activated state, that is, in a case where the second carrier is not activated, the first measuring unit 102C does not perform measurement processing such as cell search, measurement, or radio link monitoring on the first carrier in consideration of the measurement gap (section B2). That is, when the second carrier is not activated, the first measuring unit 102C does not perform measurement processing such as cell search, measurement, or radio link monitoring on the first carrier in the measurement gap for measuring the second carrier.

In the following, operation of the first measuring unit 102C is described in a case where the measurement gap for SCC shown in Fig. 14 is set.

In a case where the second carrier is in an activated state, that is, in a case where the second carrier is activated, the first measuring unit 102C performs measurement processing such as cell search, measurement, or radio link monitoring on the first carrier without consideration of the measurement section for SCC. That is, in the case where the second carrier is activated, the first measuring unit 102C performs measurement processing such as cell search, measurement, or radio link monitoring on the first carrier even in the first section, the second section, the third section and the fourth section in the measurement section for SCC.

In a case where the second carrier is in a de-activated state, that is, in a case where the second carrier is not activated, the first measuring unit 102C does not perform measurement processing such as cell search, measurement, or radio link monitoring on the first carrier in consideration of the measurement section for SCC. That is, when the second carrier is not activated, the first measuring unit 102C does not perform measurement processing such as cell search, measurement, or radio link monitoring on the first carrier in the first section and the fourth section in the measurement section for SCC. In a case where the second carrier is not activated, the first measuring unit 102C may perform measurement processing such as cell search, measurement, or radio link monitoring on the first carrier in the second section and the third section in the measurement section for SCC.

The second communicating unit 104 performs communications related to the second carrier. For example, the second communicating unit 104 performs downlink reception and uplink transmission on the second carrier, and cell search, measurement, radio link monitoring, or the like on the second carrier.

As mentioned above, in a case where the second carrier is in an activated state, the second communicating unit 104 performs normal data transmission and reception, and performs measurement of the second carrier at a proper frequency. On the other hand, in a case where the second carrier is in a de-activated state, the second communicating unit 104 does not perform normal data transmission and reception, and performs measurement of the second carrier by reducing the frequency of measurement.

Operation of the second communicating unit 104 is described below in a case where the measurement section for SCC shown in Fig. 14 is set. In a case where the second carrier is in an activated state, the second communicating unit 104 performs normal data transmission and reception on the second carrier by neglecting the measurement section for SCC, and performs measurement of the second carrier at a proper frequency. On the other hand, in a case where the second carrier is in a deactivated state, as mentioned above, the second communicating unit 104 may perform uplink transmission and downlink transmission on the second carrier, and measurement of the second carrier only in a part of the measurement section for SCC. That is, in the case where the second carrier is in a deactivated state, the second communicating unit 104 may perform uplink transmission and downlink reception only in the third section of the measurement section for SCC, and does not perform uplink transmission and downlink reception in the first section, the second section and the fourth section of the measurement section for SCC.

The second downlink receiving unit 104A receives downlink signals on the second carrier. For example, the downlink signals may be the PDSCH or the PDCCH. Alternatively, the downlink signals may be the P-BCH as broadcast information, the PSS (Primary Synchronization Signal) or the SSS (Secondary Synchronization Signal) as synchronization signals, or downlink reference signals.

In a case where the second carrier is in a de-activated state, the second downlink receiving unit 104A does not perform downlink signal reception on the second carrier.

Operation of the second downlink receiving unit 104A is described below in a case where the measurement section for SCC shown in Fig. 14 is set. In a case where the second carrier is in an activated state, the second downlink receiving unit 104A receives a downlink signal on the second carrier by neglecting the measurement section for SCC. In a case where the second carrier is in a deactivated state, the second downlink receiving unit 104A may receive a downlink signal on the second carrier only in the third section of the measurement section for SCC. That is, in the case where the second carrier is in a de-activated state, the second downlink receiving unit 104A does not receive the downlink signal in the first section, the second section and the fourth section of the measurement section for SCC. As mentioned above, in a case where the second carrier is in a de-activated state, the second downlink receiving unit 104A may receive a downlink signal only in the second section and the third section in the measurement section for SCC instead of receiving the downlink signal only in the third section in the measurement section for SCC.

The second uplink transmitting unit 104B transmits uplink signals on the second carrier. For example, the uplink signals may be the PUSCH or the PUCCH. Alternatively, the uplink signals may be sounding reference signals, demodulation reference signals, or signals on the random access channel.

In a case where the second carrier is in a de-activated state, the second uplink transmitting unit 104B does not perform uplink signal reception on the second carrier.

Operation of the second uplink transmitting unit 104B is described below in a case where the measurement section for SCC shown in Fig. 14 is set. In a case where the second carrier is in an activated state, the second uplink transmitting unit 104B transmits an uplink signal on the second carrier by neglecting the measurement section for SCC. In a case where the second carrier is in a deactivated state, the second uplink transmitting unit 104B may transmit an uplink signal only in the third section of the measurement section for SCC. That is, in the case where the second carrier is in a deactivated state, the second uplink transmitting unit 104B does not transmit the uplink signal in the first section, the second section and the fourth section of the measurement section for SCC.

The second measuring unit 104C performs measurement processing such as cell search, measurement, or radio link monitoring on the second carrier.

In the following, operation of the second measuring unit 104C is described in a case where the measurement gap shown in Figs. 5 and 6 is set.

In a case where the second carrier is in an activated state, that is, in a case where the second carrier is activated, the second measuring unit 104C may perform measurement of the second carrier, that is, may perform cell search, measurement, or radio link monitoring without consideration of the measurement gap (section B1). To perform measurement of the second carrier without consideration of the measurement gap (section B1) may mean to perform measurement of the second carrier at an arbitrary timing in the section B1 or the section B3, for example.

On the other hand, in a case where the second carrier is in a de-activated state, that is, in a case where the second carrier is not activated, the second measuring unit 104C may perform measurement of the second carrier, that is, may perform cell search, measurement, or radio link monitoring in the measurement gap (section B2).

Also, in a case where a measurement gap including two gap sections separated by a constant time is set as a measurement gap for measuring the second carrier as shown in Figs. 6-8, the second measuring unit 104C may perform measurement processing such as cell search, measurement, or radio link monitoring or the like on the second carrier in a temporally first gap section in the two gap sections. The measurement may include aftermentioned measurement of path loss.

In the following, the meaning is described that the second measuring unit 104C performs measurement processing such as cell search, measurement, radio link monitoring or the like on the second carrier in the temporally first gap section in the two gap sections.

For example, it is assumed that, in a case where the second carrier is in a de-activated state, data to transmit occurs, and uplink transmission occurs in the section between the two gap sections. In this case, it is desirable that transmission power for the uplink transmission is determined based on the newest path loss as much as possible. In this case, if path loss is measured in the section between the two gap sections, it is difficult to reflect the result of the measured path loss in determination of transmission power for the uplink transmission, in consideration of process delay and the like. In other words, by measuring path loss in the section before the section between the two gap sections, the transmission power for the uplink transmission is determined based on the newest path loss. As a result, quality of communication can be improved.

In the above-mentioned example, the path loss is estimated from received power RSRP of the downlink reference signal. Thus, to measure the path loss in the temporally first gap section in the two gap sections means to perform measurement of RSRP (so called measurement) in the temporally first gap section in the two gap sections.

Not only for the measurement of RSRP (so called measurement), but also for cell search or radio link monitoring, it is desirable to perform cell search or radio link monitoring in the temporally first gap section of the two gap sections since processing based on the measurement result becomes possible in the section between the two gap sections.

In the temporally second gap section in the two gap sections, only processing such as switching of the center frequency of the receiver occurs as mentioned above. On the other hand, in the temporally first gap section in the two gap sections, processing of the above-mentioned cell search, measurement, or radio link monitoring is performed in addition to the processing such as the switching of the center frequency of the receiver. Thus, the size of the temporally first gap section in the two gap sections may be set to be greater than the temporally second gap section in the two gap sections.

That is, the mobile station UE and the radio base station eNB may perform processing, in which the mobile station UE and the radio base station eNB do not perform communication processing on the first carrier in the temporally first gap section of the two gap sections and in the temporally second gap section of the two gap sections by regarding that data transmission and reception on the first carrier cannot be performed in the sections. Also, the size of the temporally first gap section in the two gap sections may be set to be greater than the size of the temporally second gap section in the two gap sections.

Operation of the second measuring unit 104C is described below in a case where the measurement section for SCC shown in Fig. 14 is set. In a case where the second carrier is in an activated state, the second measuring unit 104C performs measurement of the second carrier by neglecting the measurement section for SCC. In a case where the second carrier is in a de-activated state, the second measurement unit 104C may perform measurement of the second carrier in the second section in the measurement section for SCC. For example, the measurement may be cell search or measurement of a serving cell or an adjacent cell, measurement of path loss of the serving cell, or radio link monitoring. The effect in which the second measuring unit 104C performs measurement of the second carrier in the second section is the same as the effect of performing measurement in the temporally first gap section in the two gap sections. Thus, the description is not given.

The activation/de-activation control unit 106 is configured to perform management on whether the second component carrier of the mobile station UE is in a de-activated state or in an activated state. More specifically, the activation/deactivation control unit 106 is configured to perform management on whether the second carrier that is the secondary component carrier is in an activated state or in a de-activated state. The activation/deactivation control unit 106 reports information indicating whether the second carrier is in an activated state or in a de-activated state, that is, whether the second carrier is activated or not activated, to the first communicating unit 102 (the first downlink receiving unit 102A, the first uplink transmitting unit 102B, the first measuring unit 102C), the second communicating unit 104 (the second downlink receiving unit 104A, the second uplink transmitting unit 104B, the second measuring unit 104C) and the gap control unit 108.

The gap control unit 108 controls a measurement gap. More specifically, the gap control unit 108 manages a measurement gap for measuring a carrier with a different frequency or a carrier for a different radio communication system. The gap control unit 108 provides information about a subcarrier in which the measurement gap is provided to the activation/de-activation control unit 106, the first communicating unit 102 (the first downlink receiving unit 102A, the first uplink transmitting unit 102B, and the first measuring unit 102C), and the second communicating unit 104 (the second downlink receiving unit 104A, the second uplink transmitting unit 104B, and the second measuring unit 104C).

The measurement gap includes the measurement gap for measuring the second carrier described with reference to Figs. 5-9 or the measurement section for SCC described with reference to Fig. 14 in addition to the measurement gap for measurement on different frequency carriers or measurement on carriers of different mobile communication systems. That is, the gap control unit 108 manages the measurement gap for measuring the second carrier or the measurement section for SCC, and reports information on the measurement gap or the measurement section for SCC, that is, information on a subframe in which the measurement gap or the measurement section for SCC is set, for example, to the activation/de-activation control unit 106, the first communicating unit 102 (the first downlink receiving unit 102A, the first uplink transmitting unit 102B, the first measuring unit 102C), and the second communicating unit 104 (the second downlink receiving unit 104A, the second uplink transmitting unit 104B, the second measuring unit 104C). The measurement gap for measuring the second carrier or the measurement section for SCC may be different from or may be the same as the measurement gap for measurement of the different frequency carriers or for measurement of carriers of different mobile communication systems in terms of the period, configuration of gap sections, and the length of the gap sections.

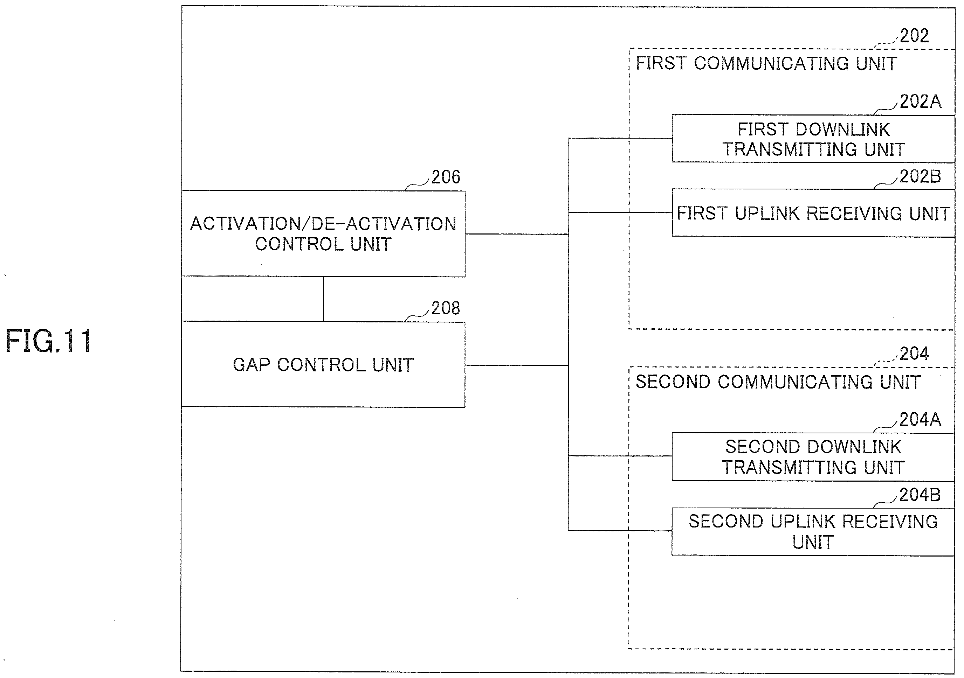

As shown in Fig. 11, the radio base station eNB includes a first communicating unit 202, a second communicating unit 204, an activation/deactivation control unit 206, and a gap unit 208. The first communicating unit 202 includes a first downlink transmitting unit 202A and a first uplink receiving unit 202B. The second communicating unit 204 includes a second downlink transmitting unit 204A and a second uplink receiving unit 204B. The first communicating unit 202, the first downlink transmitting unit 202A, the first uplink receiving unit 202B, the second communicating unit 204, the second downlink transmitting unit 204A, the second uplink receiving unit 204B, the activation/deactivation control unit 206, and the gap control unit 208 are connected with each other.

The first communicating unit 202 performs communications related to the first carrier. For example, the first communicating unit 202 performs downlink transmission and uplink reception on the first carrier.

In the following, operation of the first communicating unit 202 is described in a case where the measurement gap shown in Figs. 5 and 6 is set.

When the second carrier is in an activated state, that is, when the second carrier is activated, the first communicating unit 202 performs communication of the first carrier without consideration of the measurement gap (section B1). That is, when the second carrier is activated, the first communicating unit 202 performs communication of the first carrier even in the measurement gap for measuring the second carrier.

In a case where the second carrier is in a de-activated state, that is, in a case where the second carrier is not activated, the first communicating unit 202 does not perform communication of the first carrier in consideration of the measurement gap (section B2). That is, when the second carrier is not activated, the first communicating unit 202 does not perform communication of the first carrier in the measurement gap for measuring the second carrier.

In the following, operation of the first communicating unit 202 is described in a case where the measurement gap for SCC shown in Fig. 14 is set.

In a case where the second carrier is in an activated state, that is, in a case where the second carrier is activated, the first communicating unit 202 performs communication of the first carrier without consideration of the measurement section for SCC. That is, in the case where the second carrier is activated, the first communication unit 202 performs communication of the first carrier even in the first section, the second section, the third section and the fourth section in the measurement section for SCC.

Also, in a case where the second carrier is in a de-activated state, that is, in a case where the second carrier is not activated, the first communicating unit 202 does not perform communication of the first carrier in the first section and the fourth section of the measurement section for SCC in consideration of the measurement section for SCC. That is, when the second carrier is not activated, the first communicating unit 202 does not perform communication of the first carrier in the first section and the fourth section in the measurement section for SCC. In a case where the second carrier is not activated, the first communicating unit 202 may perform communication of the first carrier in the second section and the third section in the measurement section for SCC.

The first downlink transmitting unit 202A transmits downlink signals on the first carrier. For example, the downlink signals may be the PDSCH or the PDCCH. Alternatively, the downlink signals may be the P-BCH as broadcast information, the PSS (Primary Synchronization Signal) or the SSS (Secondary Synchronization Signal) as synchronization signals, or downlink reference signals.

In the following, operation of the first downlink transmitting unit 202A is described in a case where the measurement gap shown in Figs. 5 and 6 is set.

In a case where the second carrier is in an activated state, that is, in a case where the second carrier is activated, the first downlink transmitting unit 202A performs downlink signal transmission of the first carrier without consideration of the measurement gap (section B1). That is, when the second carrier is activated, the first downlink transmitting unit 202A performs downlink signal transmission on the first carrier even in the measurement gap for measuring the second carrier.

Alternatively, in a case where the second carrier is in an activated state, the first downlink transmitting unit 202A may perform downlink scheduling by neglecting the measurement gap for measuring the second carrier. That is, in a case where the second carrier is in an activated state, the first downlink transmitting unit 202A may perform downlink scheduling for the mobile station UE even in the measurement gap for measuring the second carrier. The "scheduling" indicates processing for selecting a mobile station UE that performs communication using a shared channel in a subframe.

In a case where the second carrier is in a de-activated state, that is, in a case where the second carrier is not activated, the first downlink transmitting unit 202A does not perform downlink signal transmission on the first carrier in consideration of the measurement gap (section B2). That is, when the second carrier is not activated, the first downlink transmitting unit 202A does not perform downlink signal transmission on the first carrier in the measurement gap for measuring the second carrier.

Alternatively, in a case where the second carrier is in a de-activated state, the first downlink transmitting unit 202A may perform scheduling such that the mobile station UE does not receive a downlink signal in the measurement gap for measuring the second carrier. The "scheduling" indicates processing for selecting a mobile station UE that performs communication using a shared channel in a subframe.

In the following, operation of the first downlink transmitting unit 202A is described in a case where the measurement gap for SCC shown in Fig. 14 is set.

In a case where the second carrier is in an activated state, that is, in a case where the second carrier is activated, the first downlink transmitting unit 202A performs downlink signal transmission on the first carrier without consideration of the measurement section for SCC. That is, in the case where the second carrier is activated, the first downlink transmitting unit 202A performs downlink signal transmission on the first carrier even in the first section, the second section, the third section and the fourth section in the measurement section for SCC for measuring the second carrier.

In a case where the second carrier is in a de-activated state, that is, in a case where the second carrier is not activated, the first downlink transmitting unit 202A does not perform downlink signal transmission in consideration of the measurement section for SCC. That is, when the second carrier is not activated, the first downlink transmitting unit 202A does not perform downlink signal transmission on the first carrier in the first section and the fourth section in the measurement section for SCC. In a case where the second carrier is not activated, the first downlink transmitting unit 202A may perform downlink signal transmission on the first carrier in the second section and the third section in the measurement section for SCC.

The first uplink receiving unit 202B receives uplink signals on the first carrier. For example, the uplink signals may be the PUSCH or the PUCCH. Alternatively, the uplink signals may be sounding reference signals, demodulation reference signals, or a random access channel.

In the following, operation of the first uplink receiving unit 202B is described in a case where the measurement gap shown in Figs. 5 and 6 is set.

In a case where the second carrier is in an activated state, that is, in a case where the second carrier is activated, the first uplink receiving unit 202B performs uplink signal reception on the first carrier without consideration of the measurement gap (section B1). That is, when the second carrier is activated, the first uplink receiving unit 202B performs uplink signal reception on the first carrier even in the measurement gap for measuring the second carrier.

Alternatively, in a case where the second carrier is activated, the first uplink receiving unit 202B may perform uplink scheduling by neglecting the measurement gap for measuring the second carrier. That is, in a case where the second carrier is activated, the first uplink receiving unit 202B may perform uplink scheduling for the mobile station UE even in the measurement gap for measuring the second carrier. The "scheduling" indicates processing for selecting a mobile station UE that performs communication using a shared channel in a subframe. More specifically, the first uplink receiving unit 202B may be configured not to transmit an uplink scheduling grant to the mobile station UE in a corresponding subframe of downlink such that the mobile station does not transmit an uplink signal in the measurement gap for measuring the second carrier. The uplink scheduling grant may be transmitted via the first downlink transmission unit 202A.

In a case where the second carrier is in a de-activated state, that is, in a case where the second carrier is not activated, the first uplink receiving unit 202B does not perform uplink signal reception on the first carrier in consideration of the measurement gap (section B2). That is, when the second carrier is not activated, the first uplink receiving unit 202B does not perform uplink signal reception on the first carrier in the measurement gap for measuring the second carrier.

Alternatively, in a case where the second carrier is not activated, the first uplink receiving unit 202B may perform scheduling such that the mobile station UE does not transmit an uplink signal in the measurement gap for measuring the second carrier. The "scheduling" indicates processing for selecting a mobile station UE that performs communication using a shared channel in a subframe. More specifically, the first uplink receiving unit 202B may be configured not to transmit an uplink scheduling grant to the mobile station UE in a corresponding subframe of downlink such that the mobile station UE does not transmit an uplink signal in the measurement gap for measuring the second carrier. The uplink scheduling grant may be transmitted via the first downlink transmitting unit 202A.

In the following, operation of the first uplink receiving unit 202B is described in a case where the measurement gap for SCC shown in Fig. 14 is set.

In a case where the second carrier is in an activated state, that is, in a case where the second carrier is activated, the first uplink receiving unit 202B performs uplink signal reception on the first carrier without consideration of the measurement section for SCC. That is, in the case where the second carrier is activated, the first uplink receiving unit 202B performs uplink signal reception on the first carrier even in the first section, the second section, the third section and the fourth section in the measurement section for SCC for measuring the second carrier.

In a case where the second carrier is in a de-activated state, that is, in a case where the second carrier is not activated, the first uplink receiving unit 202B does not perform downlink signal reception on the first carrier in consideration of the measurement section for SCC. That is, when the second carrier is not activated, the first uplink receiving unit 202B does not perform uplink signal reception on the first carrier in the first section and the fourth section in the measurement section for SCC. In a case where the second carrier is not activated, the first uplink receiving unit 202B may perform uplink signal reception on the first carrier in the second section and the third section in the measurement section for SCC.

Also in the case of the measurement section for SCC shown in Fig. 14, like the gap section for measuring the second carrier shown in Figs. 5-9, scheduling may be performed such that uplink communication or downlink communication does not occur in the first section and the fourth section. That is, in the first section and the fourth section, transmission of uplink scheduling grant or downlink scheduling information which causes uplink or downlink communication may be restricted.

The second communicating unit 204 performs communications related to the second carrier. For example, the second communicating unit 204 performs downlink transmission and uplink reception and the like on the second carrier.

As mentioned above, in a case where the second carrier is in an activated state, the second communicating unit 204 performs normal data transmission and reception. On the other hand, in a case where the second carrier is in a de-activated state, the second communicating unit 204 does not perform normal data transmission and reception.

Operation of the second communicating unit 204 is described below in a case where the measurement section for SCC shown in Fig. 14 is set. In a case where the second carrier is in an activated state, the second communicating unit 204 performs normal data transmission and reception on the second carrier by neglecting the measurement section for SCC. On the other hand, in a case where the second carrier is in a de-activated state, as mentioned above, the second communicating unit 204 may perform uplink reception or downlink transmission on the second carrier only in a part of the measurement section for SCC. That is, in the case where the second carrier is in a de-activated state, the second communicating unit 204 performs uplink reception and downlink transmission only in the third section of the measurement section for SCC, and does not perform uplink reception and downlink transmission in the first section, the second section and the fourth section of the measurement section for SCC.

The second downlink transmitting unit 204A transmits downlink signals on the second carrier. For example, the downlink signals may be the PDSCH or the PDCCH. Alternatively, the downlink signals may be the P-BCH as broadcast information, the PSS (Primary Synchronization Signal) or the SSS (Secondary Synchronization Signal) as synchronization signals, or downlink reference signals.

In a case where the second carrier is in a de-activated state, the second downlink transmitting unit 204A does not perform downlink signal transmission on the second carrier.

Operation of the second downlink transmitting unit 204A is described below in a case where the measurement section for SCC shown in Fig. 14 is set. In a case where the second carrier is in an activated state, the second downlink transmitting unit 204A transmits a downlink signal on the second carrier by neglecting the measurement section for SCC. In a case where the second carrier is in a deactivated state, the second downlink transmitting unit 204A may transmit a downlink signal only in the third section of the measurement section for SCC. That is, in the case where the second carrier is in a de-activated state, the second downlink transmitting unit 204A does not transmit the downlink signal in the first section, the second section and the fourth section of the measurement section for SCC. As mentioned above, in a case where the second carrier is in a de-activated state, the second downlink transmitting unit 204A may transmit a downlink signal only in the second section and the third section in the measurement section for SCC instead of transmitting the downlink signal only in the third section in the measurement section for SCC.

The second uplink receiving unit 204B receives uplink signals on the second carrier. For example, the uplink signals may be the PUSCH or the PUCCH. Alternatively, the uplink signals may be sounding reference signals, demodulation reference signals, or the random access channel.

In a case where the second carrier is in a de-activated state, the second uplink receiving unit 204B does not perform uplink signal reception on the second carrier.

In a case where the second carrier is in a de-activated state and there is an uplink signal to be transmitted, the second uplink receiving unit 204B may perform scheduling of uplink in the second carrier, that is, may perform assignment of a shared channel of the second carrier such that the uplink signal is transmitted right after the section B2. More specifically, in a case where the second carrier is in a de-activated state and there is an uplink signal to be transmitted, the second uplink receiving unit 204B may transmit an uplink scheduling grant, in downlink, that is a control signal for instructing uplink signal transmission such that the uplink signal is transmitted right after the section B2.

Operation of the second uplink receiving unit 204B is described below in a case where the measurement section for SCC shown in Fig. 14 is set. In a case where the second carrier is in an activated state, the second uplink receiving unit 204B receives an uplink signal on the second carrier by neglecting the measurement section for SCC. In a case where the second carrier is in a de-activated state, the second uplink receiving unit 204B may receive an uplink signal only in the third section of the measurement section for SCC. That is, in the case where the second carrier is in a de-activated state, the second uplink receiving unit 204B does not receive the uplink signal in the first section, the second section and the fourth section of the measurement section for SCC.

As mentioned above, in the section B2 or the measurement section for SCC, since cell search or measurement on the second carrier is performed, accuracy of path loss used for uplink transmission is considered to be high. Thus, in a case where uplink transmission is performed in a de-activated state, uplink transmission power control is performed more properly and communication quality is improved by instructing the mobile station UE to transmit an uplink signal right after the section B2 or the measurement section for SCC. Alternatively, in the same reason, in a case where the second carrier is in a de-activated state, the radio base station eNB may activate the second carrier right after the section B2 or the measurement section for SCC.

In a case where a measurement gap that includes two gap sections is set as shown in Fig. 6, uplink transmission may be instructed such that uplink transmission is performed in a section between the two gap sections. In this case, as shown in Fig. 14, the uplink transmission may be performed in the second half section (third section in Fig. 14) in sections between the two gap sections.

The activation/de-activation control unit 206 is configured to perform management and control on whether the secondary component carrier of each mobile station UE in a cell is in an activated state or in a de-activated state. More specifically, the activation/de-activation control unit 206 is configured to perform management and control on whether the second carrier that is the secondary component carrier is in an activated state or in a de-activated state for each mobile station UE in the cell. The activation/de-activation control unit 206 reports information indicating whether the second carrier of each mobile station UE in the cell is in an activated state or in a de-activated state, that is, whether the second carrier is activated or not activated, to the first communicating unit 202 (the first downlink transmitting unit 202A, the first uplink receiving unit 202B), the second communicating unit 204 (the second downlink transmitting unit 204A, the second uplink receiving unit 204B) and the gap control unit 208.

The gap control unit 208 controls a measurement gap. More specifically, the gap control unit 208 manages a measurement gap for measuring a carrier with a different frequency or a carrier for a different radio communication system. The gap control unit 208 provides information about a subcarrier in which the measurement gap is provided for each mobile station in the cell to the activation/de-activation control unit 206, the first communicating unit 202 (the first downlink transmitting unit 202A, the first uplink receiving unit 202B), and the second communicating unit 204 (the second downlink transmitting unit 204A, the second uplink receiving unit 204B).

In a case where a measurement gap is set for each mobile station in the cell, the gap control unit 208 may transmit the setting information to each mobile station in the cell using an RRC message. The RRC message may be reported to the mobile station UE via the first downlink transmitting unit 202A or the second downlink transmitting unit 202A.

The measurement gap includes the measurement gap for measuring the second carrier described with reference to Figs. 5-9 or the measurement section for SCC described with reference to Fig. 14 in addition to the measurement gap for measurement on different frequency carriers or measurement on carriers of different mobile communication systems. That is, the gap control unit 208 manages the measurement gap for measuring the second carrier or the measurement section for SCC, and the gap control unit 208 reports information on the measurement gap or the measurement section for SCC, that is, information on a subframe in which the measurement gap or the measurement section for SCC is set, for example, to the activation/de-activation control unit 206, the first communicating unit 202 (the first downlink transmitting unit 202A, the first uplink receiving unit 202B), and the second communicating unit 204 (the second downlink transmitting unit 204A, the second uplink receiving unit 204B).

The measurement gap for measuring the second carrier or the measurement section for SCC may be different from or may be the same as the measurement gap for measurement on the different frequency carriers or for measurement on carriers of different mobile communication systems in terms of the period, configuration of gap sections, and the length of the gap sections.

The measurement gap for measuring the second carrier or the measurement section for SCC may be set as a measurement gap that is the same as or different from the measurement gap for measurement on the different frequency carriers or for measurement on carriers of different mobile communication systems. When the measurement gap for measuring the second carrier or the measurement section for SCC is set as a measurement gap different from the measurement gap for measurement on the different frequency carriers or for measurement on carriers of different mobile communication systems, the measurement gap for measuring the second carrier or the measurement section for SCC may be set at the same time when the measurement gap for measurement on the different frequency carriers or for measurement on carriers of different mobile communication systems is set.

Also, the measurement gap for measuring the second carrier or the measurement section for SCC may be a measurement gap that is applied only when a carrier of measurement target is in a de-activated state.

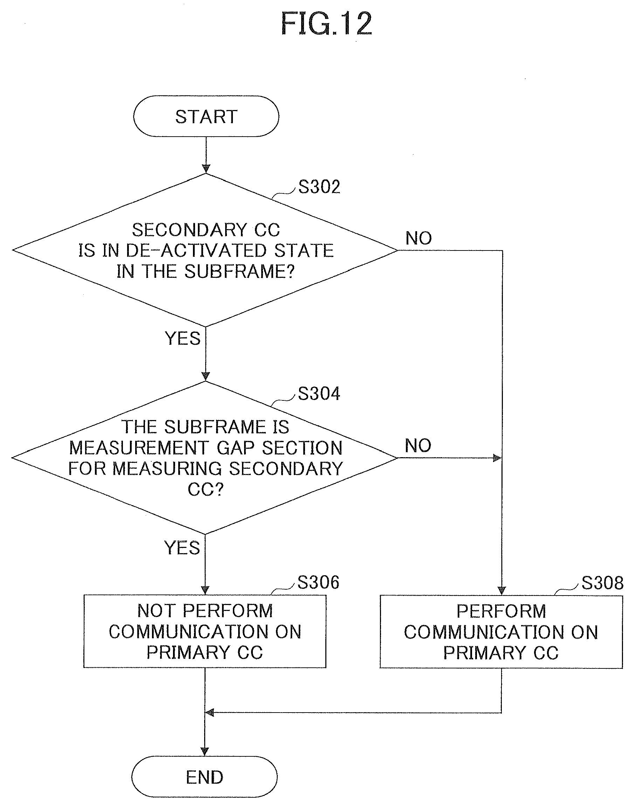

A communication control method in the mobile station UE according to the present embodiment is described with reference to Fig. 12.

In step S302, the mobile station UE determines whether the secondary component carrier (secondary CC) is in a de-activated state in a corresponding subframe. The secondary CC corresponds to the second carrier in the above description.

When the secondary CC is in a de-activated state in the subframe (step S302:Yes), the mobile station UE determines whether the subframe is a gap section for measuring the secondary CC. Instead of determining whether the subframe is a gap section for measuring the secondary CC, the mobile station UE may determine whether the subframe is the first section or the fourth section shown in Fig. 14.

If the subframe is a gap section for measuring the secondary CC (step S304:YES), the mobile station UE does not perform communication on the primary component carrier (primary CC) in the subframe (step S306). That is, the mobile station UE does not perform uplink transmission and downlink reception on the primary component carrier (primary CC) in the subframe. The primary CC corresponds to the first carrier in the above-mentioned description.

When the secondary CC is not in the de-activated state in the subframe (step S302:NO), or when the secondary CC is in a de-activated state in the subframe and the subframe is not a gap section for the secondary CC (step S304:NO), the mobile station UE performs communication on the primary CC in the subframe (step S308).

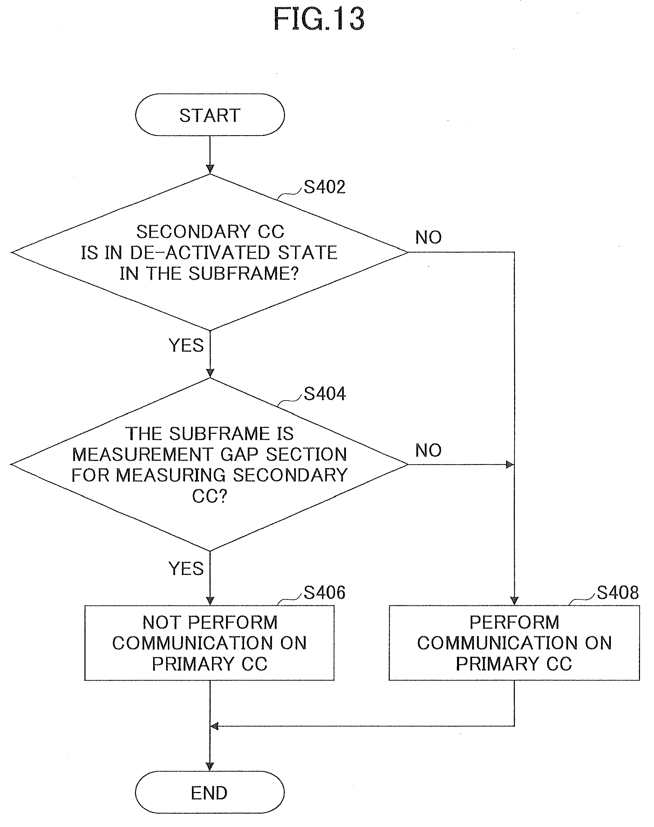

A communication control method in the radio base station eNB according to the present embodiment is described with reference to Fig. 13.

In step S402, the radio base station eNB determines whether the secondary component carrier (secondary CC) of the mobile station UE is in a de-activated state in a corresponding subframe. The secondary CC corresponds to the second carrier in the above description.

When the secondary CC of the mobile station UE is in a de-activated state in the subframe (step S402:Yes), the radio base station eNB determines whether the subframe is a gap section for measuring the secondary CC of the mobile station UE in step S404. Instead of determining whether the subframe is a gap section for measuring the secondary CC, the radio base station eNB may determine whether the subframe is the first section or the fourth section shown in Fig. 14.

If the subframe is a gap section for measuring the secondary CC of the mobile station UE (step S404:YES), the radio base station eNB does not perform communication on the primary component carrier (primary CC) for the mobile station UE in the subframe (step S406). That is, the radio base station eNB does not perform downlink transmission and uplink reception on the primary component carrier (primary CC) for the mobile station UE in the subframe. Alternatively, the radio base station eNB may perform scheduling such that downlink transmission or uplink reception on the primary CC for the UE does not occur. The primary CC corresponds to the first carrier in the above-mentioned description.

When the secondary CC of the mobile station UE is not in the de-activated state in the subframe (step S402:NO), or when the secondary CC of the mobile station UE is in a de-activated state in the subframe and the subframe is not a gap section for the secondary CC of the mobile station UE (step S404:NO), the radio base station eNB performs communication on the primary CC for the mobile station UE in the subframe (step S408). Alternatively, the radio base station eNB may perform downlink or uplink scheduling for the primary CC on the UE.

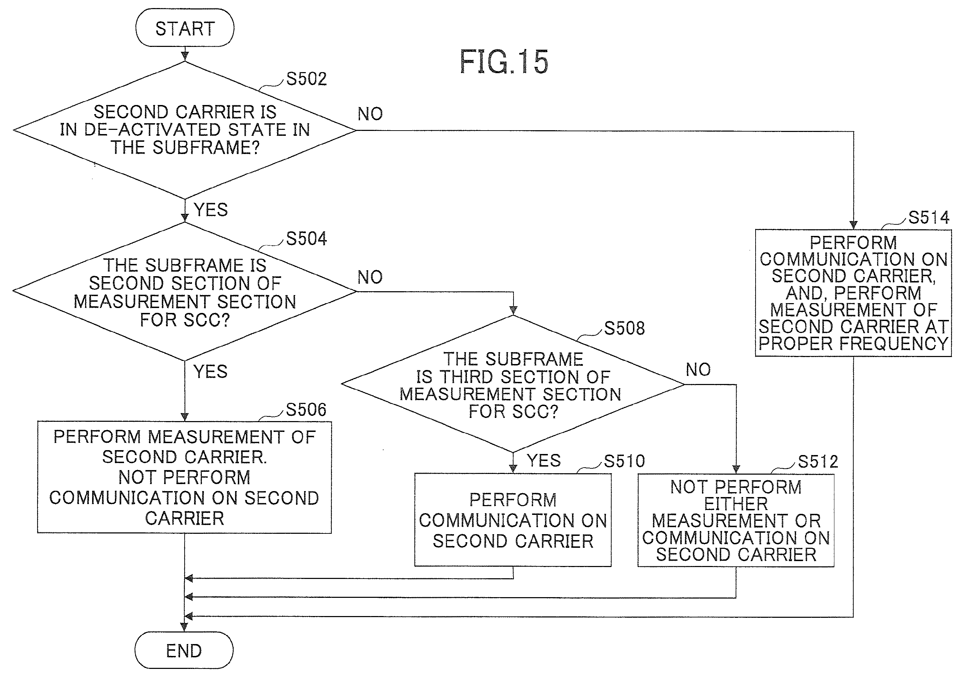

A communication control method in the mobile station UE according to the present embodiment is described with reference to Fig. 15.

In step S502, the mobile station UE determines whether the second carrier is in a de-activated state in a corresponding subframe. The second carrier may be the secondary component carrier.

When the second carrier is in a de-activated state in the subframe (step S502:YES), the mobile station UE determines whether the subframe is the second section of the measurement section for SCC in step 504.

When the subframe is the second section of the measurement section for SCC (step S504:YES), the mobile station UE performs measurement of the second carrier and does not perform communication on the second carrier (step S506). That is, the mobile station UE performs cell search, measurement, radio link monitoring or the like on the second carrier in the subframe, but does not perform uplink transmission or downlink reception on the second carrier in the subframe.

When the subframe is not the second section of the measurement section for SCC (step S504:No), the mobile station determines whether the subframe is the third section of the measurement section for SCC (step S508)

When the subframe is the third section of the measurement section for SCC (step S508:YES), the mobile station UE performs measurement of the second carrier in the subframe (step S510). That is, the mobile station UE transmits an uplink signal and receives a downlink signal using the second carrier in the subframe.

When the subframe is not the third section of the measurement section for SCC in step S508 (step S508:No), the mobile station UE does not perform either measurement or communication on the second carrier in the subframe. The mobile station UE performs communication on the primary CC (step S512).

When the second carrier is not in a de-activated state in the subframe (step 502:NO), the mobile station UE performs communication on the second carrier and performs measurement of the second carrier at a proper frequency (step S514).

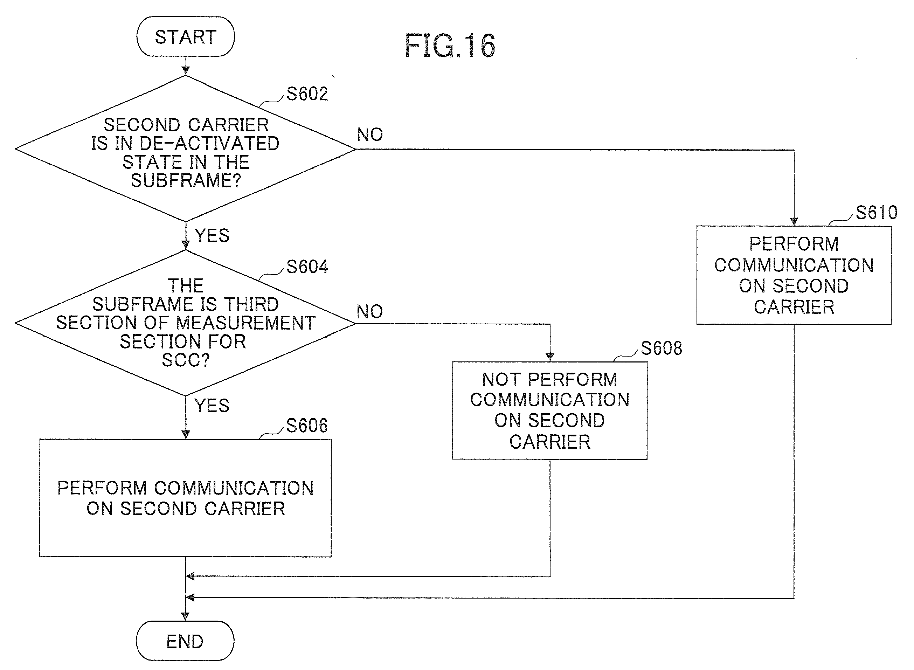

A communication control method in the radio base station eNB according to the present embodiment is described with reference to Fig. 16.

In step S602, the radio base station eNB determines whether the second carrier is in a de-activated state in a corresponding subframe. The second carrier may be the secondary component carrier.

When the second carrier is in a de-activated state in the subframe (step S602:YES), the radio base station eNB determines whether the subframe is the third section of the measurement section for SCC in step 604.

When the subframe is the third section of the measurement section for SCC (step S604:YES), the radio base station eNB performs communication on the second carrier in the subframe (step S606). That is, the radio base station eNB performs uplink reception and downlink transmission on the second carrier.

When the subframe is not the third section of the measurement section for SCC (step S604:No), the radio base station eNB does not perform communication on the second carrier in the subframe (step S608).

When the second carrier is not in a de-activated state in the subframe (step 602:NO), the radio base station eNB performs communication on the second carrier (step S610).

In the above-mentioned example, operation is described in which, when the second carrier is not activated, the mobile station UE and the radio base station eNB perform communication on the second carrier in the third section shown in Fig. 14 or the section between the two gap sections shown in Figs. 6-9. Instead of this operation, when the second carrier is not activated, operation may be adopted in which communication is not performed in the second carrier. In this case, the mobile station UE may perform measurement of the second carrier as operation on the second carrier in the gap section shown in Fig. 14 or Figs. 6-9.

In the above-mentioned example, as an operation of the mobile station UE and the radio base station eNB, operation is described in which, in a state where a measurement gap for measuring the second carrier that is the secondary component carrier is set, when the secondary component carrier is activated, the measurement gap is neglected, on the other hand, when the secondary component carrier is not activated, communication of the first carrier is stopped in the gap section of the measurement gap. Instead of this operation, an operation may be adopted in which, in a state where a measurement gap for measuring the second carrier that is the secondary component carrier is set, when the secondary component carrier is not in a DRX state, the measurement gap is neglected, on the other hand, when the secondary component carrier is in a DRX state, communication of the first carrier is stopped in the gap section of the measurement gap.

The measurement gap and on-duration of the DRX control may be the same. That is, the present embodiment is not limited to the cases where the secondary component carrier is in an activated state / where the secondary component carrier is in a de-activated state, and the present embodiment may be applied to the cases where the secondary component carrier is in a non-DRX state / where the secondary component carrier is in a DRX state. In this case, the sections B1 and B2 shown in Fig. 5 may correspond to the on-duration, and sections, in which the mobile station UE switches the center frequency of the receiver, that accompany before and after the on-duration. Alternatively, the two divided gap sections shown in Fig. 6 may correspond to the sections, in which the mobile station UE switches the center frequency of the receiver, that accompany before and after the on-duration, and the section between the two divided gap sections may correspond to the on-duration.

Alternatively, the present embodiment is not limited to the case where the secondary component carrier is in the activated state or in the de-activated state, but may be applied to the case where the secondary component carrier is in a state in which communications are always performed or in a state in which communications are intermittently performed. For example, the state in which communications are intermittently performed may include a state where monitoring of control signals, cell search, or measurement is intermittently performed and usual data communications are not performed.

The state which is not in the DRX state may be called a non-DRX state. The Non-DRX state may be a state in which a parameter associated with discontinuous reception control is not configured, a state in which a parameter associated with discontinuous reception control is configured and a timer for discontinuous reception control is in an operating state, a state in which a parameter associated with discontinuous reception control is configured and a scheduling request is in a pending state, a state in which a parameter associated with discontinuous reception control is configured and a timing for uplink HARQ retransmission is provided, or a state in which a parameter associated with discontinuous reception control is configured and a downlink control signal for initial transmission destined for the own station is not received after a random access response for a specified preamble is received. In addition, the DRX state may be a state other than the Non-DRX state.

Effects of a mobile station UE, a radio base station eNB, a communication control method in accordance with this embodiment are described below.

As mentioned above, according to the present embodiment, in a state where the measurement gap is set for measuring the second carrier that is the secondary component carrier, when the secondary component carrier is activated, deterioration of throughput due to the measurement gap is avoided by neglecting the measurement gap, on the other hand, when the secondary component carrier is not activated, an event can be avoided in which data to be transmitted and received is lost in the mobile station UE by performing measurement of the second carrier while stopping the communication of the first carrier in consideration of the measurement gap.

Although transition between the activated state and the de-activated state is performed in the MAC layer for performing control quickly, setting of the measurement gap is performed in the RRC layer that is an upper layer of the MAC layer. Therefore, if setting and release of the measurement gap is performed according to transition between the activated state and the de-activated state, the advantage of the MAC layer control in which control is performed quickly disappears. That is, setting of the measurement gap needs to be performed irrespective of whether the state is in the activated state or the de-activated state.

The operations in the mobile station UE and the radio base station eNB as described above may be applied to a mobile station, a radio base station, and a control station in a system other than the LTE-Advanced system. For example, the operations may be applied to a mobile station, a radio base station, and a control station in an LTE system, a WCDMA system, a CDMA 2000 system, or a WiMAX system.

The operations in the mobile station UE and the radio base station eNB as described above may be implemented as hardware, a software module executed by a processor, or a combination of them.

The software module may be stored in a storage medium of any type, such as a random access memory (RAM), a flash memory, a read-only memory (ROM), an erasable programmable ROM (EPROM), an electronically erasable and programmable ROM (EEPROM), a register, a hard disk, a removable disk, or a CD-ROM.

The storage medium is connected to a processor in order for the processor to read and write information in the storage medium. Alternatively, the storage medium may be integrated in the processor. Alternatively, the storage medium and the processor may be included in an application specific integrated circuit (ASIC). The ASIC may be included in a mobile station UE and a radio base station eNB. Alternatively, the storage medium and the processor may be included in a mobile station UE and a radio base station eNB as a discrete component.

While the embodiments of the present invention have been described in detail, a person skilled in the art clearly understands that the present invention is not limited to the embodiments described in the specification. The present invention can be modified or changed without departing from the intention and the scope of the present invention defined by the claims. Thus, the specification is provided for the purpose of illustration and should not be treated as limiting the present invention. Thus, the specification is provided for the purpose of illustration and should not be treated as limiting the present invention.

The present international application claims priority based on Japanese patent application No. 2010-118834, filed in the JPO on May 24, 2010.

### DESCRIPTION OF NOTATIONS

- UE: mobile station
- 102: first communicating unit
- 102A: first downlink receiving unit
- 102B: first uplink transmitting unit
- 102C: first measuring unit
- 104A: second downlink receiving unit
- 104B: second uplink transmitting unit
- 104C: second measuring unit
- 106: Activation/De-activation control unit
- 108: gap control unit
- eNB: radio base station
- 202A: first downlink transmitting unit
- 202B: first uplink receiving unit
- 204A: second downlink transmitting unit
- 204B: second uplink receiving unit
- 206: Activation/De-activation control unit
- 208: gap control unit

## Claims

1. A mobile station (UE) that communicates with a radio base station (eNB) using equal to or greater than two carriers, wherein the equal to or greater than two carriers include a first carrier and a second carrier wherein the first carrier and the second carrier belong to the same frequency band, the mobile station (UE) comprising:
**a)** a first communicating unit (102) configured to perform communication with the first carrier; and
**b)** a second carrier measuring unit (104C) configured to perform measurement of the second carrier,
**c1)** wherein in a case where a measurement gap set in the first carrier for measuring the second carrier is set (B1), the first communicating unit (102) is configured to perform communication with the first carrier without considering the measurement gap when the second carrier is activated (B1), and
**c2)** wherein the first communication unit (102) is further configured not to perform (B2) communication with the first carrier in the measurement gap when the second carrier is not activated (B2).

2. The mobile station (UE) as claimed in claim 1, wherein, the second carrier measuring unit (104C) is configured to perform measurement of the second carrier without using the measurement gap when the second carrier is activated, and to perform measurement of the second carrier using the measurement gap when the second carrier is not activated.

3. The mobile station (UE) as claimed in claim 1, wherein the measurement gap is a time section provided to measure a carrier of a different frequency or a carrier of a different radio communication system.

4. The mobile station (UE) as claimed in claim 1, wherein the measurement gap includes two gap sections, and the two gap sections are respectively periodically provided.

5. The mobile station as claimed in claim 1, wherein the second carrier measurement unit (104C) is adapted to perform cell search, measurement of received power of reference signals and radio link monitoring.

6. A communication control method in a mobile station (UE) that communicates with a radio base station (eNB) using equal to or greater than two carriers, wherein the equal to or greater than two carriers include a first carrier and a second carrier wherein the first carrier and the second carrier belong to the same frequency band, the communication control method comprising:
**a)** a first step of performing communication with the first carrier; and
**b)** a second step of performing measurement of the second carrier,
**c1)** wherein in the first step, in a case where a measurement gap set in the first carrier for measuring the second carrier is set (B1), when the second carrier is activated, the mobile station (UE) performs communication with the first carrier without considering the measurement gap, and
**c2)** when the second carrier is not activated, the mobile station (UE) does not perform (B2) communication with the first carrier in the measurement gap.

7. A radio base station (eNB) that communicates with a mobile station (UE) using equal to or greater than two carriers, wherein the equal to or greater than two carriers include a first carrier and a second carrier wherein the first carrier and the second carrier belong to the same frequency band, the radio base station (eNB) comprising:
**a**) a first communicating unit (202) configured to perform communication with the first carrier,
**b)** wherein in a case where a measurement gap set in the first carrier for measuring the second carrier is set (B1), the first communicating unit (202) is configured
**c1**) to perform communication with the first carrier without consideration of the measurement gap when the second carrier is activated, and
**c2)** wherein the first communication unit (202) is further configured not (B2) to perform communication with the first carrier in the measurement gap when the second carrier is not activated.

8. The radio base station as claimed in claim 7, wherein the first communicating unit (202) is adapted to transmit control signals via a control channel in order to perform scheduling of uplink and downlink such that communication with the first carrier is not performed in the measurement gap.

9. A communication control method in a radio base station (eNB) that communicates with a mobile station (UE) using equal to or greater than two carriers, wherein the equal to or greater than two carriers include a first carrier and a second carrier wherein the first carrier and the second carrier belong to the same frequency band, the communication control method comprising:
**a)** a first step of performing communication with the first carrier,
**b)** wherein in a case where a measurement gap set in the first carrier for measuring the second carrier is set,
**c1)** when the second carrier is activated, the radio base station (eNB) performs (B1) communication with the first carrier without consideration of the measurement gap, and
**c2)** when the second carrier is not activated, the radio base station (eNB) does not perform (B2) communication with the first carrier in the measurement gap.

## Patentansprüche

1. Mobilstation (UE), welche mit einer Funkbasisstation (eNB) unter Verwendung von zwei oder mehr Trägern kommuniziert, wobei die zwei oder mehr Träger einen ersten Träger und einen zweiten Träger beinhalten, wobei der erste Träger und der zweite Träger demselben Frequenzband angehören, wobei die Mobilstation (UE) umfasst:
a) eine erste Kommunikationseinheit (102), die dafür ausgelegt ist, eine Kommunikation mit dem ersten Träger durchzuführen; und
b) eine zweite Trägermesseinheit (104C), die dafür ausgelegt ist, eine Messung des zweiten Trägers durchzuführen,
c1) wobei in einem Fall, wenn ein Messlückensatz in dem ersten Träger zum Messen des zweiten Trägers eingestellt ist (B1), die erste Kommunikationseinheit (102) dafür ausgelegt ist, eine Kommunikation mit dem ersten Träger ohne Berücksichtigung der Messlücke durchzuführen, wenn der zweite Träger aktiviert ist (B1), und
c2) wobei die erste Kommunikationseinheit (102) ferner dafür ausgelegt ist, keine Kommunikation mit dem ersten Träger in der Messlücke durchzuführen, wenn der zweite Träger nicht aktiviert ist (B2).

2. Mobilstation (UE) nach Anspruch 1, wobei die zweite Trägermesseinheit (104C) dafür ausgelegt ist, eine Messung des zweiten Trägers ohne Verwendung der Messlücke durchzuführen, wenn der zweite Träger aktiviert ist, und eine Messung des zweiten Trägers unter Verwendung der Messlücke durchzuführen, wenn der zweite nicht Träger aktiviert ist.

3. Mobilstation (UE) nach Anspruch 1, wobei die Messlücke ein Zeitabschnitt ist, der dazu vorgesehen ist, einen Träger einer anderen Frequenz oder einen Träger eines anderen Funkkommunikationssystems zu messen.

4. Mobilstation (UE) nach Anspruch 1, wobei die Messlücke zwei Lückenabschnitte beinhaltet und die zwei Lückenabschnitte jeweils periodisch vorgesehen sind.

5. Mobilstation nach Anspruch 1, wobei die zweite Trägermesseinheit (104C) dazu eingerichtet ist, Zellensuche, Messung von empfangener Leistung von Referenzsignalen und Funkstreckenüberwachung durchzuführen.

6. Kommunikationsprotokollverfahren in einer Mobilstation (UE), welche mit einer Funkbasisstation (eNB) unter Verwendung von zwei oder mehr Trägern kommuniziert, wobei die zwei oder mehr Träger einen ersten Träger und einen zweiten Träger beinhalten, wobei der erste Träger und der zweite Träger demselben Frequenzband angehören, wobei das Kommunikationsprotokollverfahren umfasst:
a) einen ersten Schritt des Durchführens einer Kommunikation mit dem ersten Träger; und
b) einen zweiten Schritt des Durchführens einer Messung des zweiten Trägers,
c1) wobei in dem ersten Schritt in einem Fall, wenn ein Messlückensatz in dem ersten Träger zum Messen des zweiten Trägers eingestellt ist (B1), wenn der zweite Träger aktiviert ist, die Mobilstation (UE) eine Kommunikation mit dem ersten Träger ohne Berücksichtigung der Messlücke durchführt, und
c2) wenn der zweite Träger nicht aktiviert ist, die Mobilstation (UE) keine Kommunikation mit dem ersten Träger in der Messlücke durchführt (B2).

7. Funkbasisstation (eNB), welche mit einer Mobilstation (UE) unter Verwendung von zwei oder mehr Trägern kommuniziert, wobei die zwei oder mehr Träger einen ersten Träger und einen zweiten Träger beinhalten, wobei der erste Träger und der zweite Träger demselben Frequenzband angehören, wobei die Funkbasisstation (eNB) umfasst:
a) eine erste Kommunikationseinheit (202), die dafür ausgelegt ist, eine Kommunikation mit dem ersten Träger durchzuführen,
b) wobei in einem Fall, wenn ein Messlückensatz in dem ersten Träger zum Messen des zweiten Trägers eingestellt ist (B1), die erste Kommunikationseinheit (202) dafür ausgelegt ist,
c1) eine Kommunikation mit dem ersten Träger ohne Berücksichtigung der Messlücke durchzuführen, wenn der zweite Träger aktiviert ist, und
c2) wobei die erste Kommunikationseinheit (202) ferner dafür ausgelegt ist, keine Kommunikation mit dem ersten Träger in der Messlücke durchzuführen (B2), wenn der zweite Träger nicht aktiviert ist.

8. Funkbasisstation nach Anspruch 7, wobei die erste Kommunikationseinheit (202) dazu eingerichtet ist, Steuersignale über einen Steuerkanal zu übertragen, um eine Zeitplanung für Aufwärtsstrecke und Abwärtsstrecke derart durchzuführen, dass die Kommunikation mit dem ersten Träger nicht in der Messlücke durchgeführt wird.

9. Kommunikationssteuerungsverfahren in einer Funkbasisstation (eNB), welche mit einer Mobilstation (UE) unter Verwendung von zwei oder mehr Trägern kommuniziert, wobei die zwei oder mehr Träger einen ersten Träger und einen zweiten Träger beinhalten, wobei der erste Träger und der zweite Träger demselben Frequenzband angehören, wobei das Kommunikationssteuerungsverfahren umfasst:
a) einen ersten Schritt des Durchführens einer Kommunikation mit dem ersten Träger,
b) wobei in einem Fall, wenn ein Messlückensatz in dem ersten Träger zum Messen des zweiten Trägers eingestellt ist,
c1) wenn der zweite Träger aktiviert ist, die Funkbasisstation (eNB) eine Kommunikation mit dem ersten Träger ohne Berücksichtigung der Messlücke durchführt (B1), und
c2) wenn der zweite Träger nicht aktiviert ist, die Funkbasisstation (eNB) keine Kommunikation mit dem ersten Träger in der Messlücke durchführt (B2).

## Revendications

1. Station mobile (UE) qui communique avec une station de base radio (eNB) en utilisant deux porteuses ou plus, dans laquelle les deux porteuses ou plus comprennent une première porteuse et une seconde porteuse, dans laquelle la première porteuse et la seconde porteuse appartiennent à la même bande de fréquence, la station mobile (UE) comprenant :
a) une première unité de communication (102) configurée pour effectuer la communication avec la première porteuse ; et
b) une seconde unité de mesure de porteuse (104C) configurée pour effectuer la mesure de la seconde porteuse,
c1) dans laquelle, dans un cas où un intervalle de mesure établi dans la première porteuse pour mesurer la seconde porteuse est établi (B1), la première unité de communication (102) est configurée pour effectuer une communication avec la première porteuse sans tenir compte de l'intervalle de mesure quand la seconde porteuse est activée (B1), et
c2) dans laquelle la première unité de communication (102) est en outre configurée de façon à ne pas effectuer (B2) de communication avec la première porteuse dans l'intervalle de mesure quand la seconde porteuse n'est pas activée (B2).

2. Station mobile (UE) selon la revendication 1, dans laquelle, la seconde unité de mesure de porteuse (104C) est configurée pour effectuer la mesure de la seconde porteuse sans utiliser l'intervalle de mesure quand la seconde porteuse est activée, et pour effectuer la mesure de la seconde porteuse en utilisant l'intervalle de mesure quand la seconde porteuse n'est pas activée.

3. Station mobile (UE) selon la revendication 1, dans laquelle l'intervalle de mesure est une section de temps fournie pour mesurer une porteuse d'une fréquence différente ou une porteuse d'un système de communication radio différent.

4. Station mobile (UE) selon la revendication 1, dans laquelle l'intervalle de mesure comprend deux sections d'intervalle, et les deux sections d'intervalle sont respectivement fournies périodiquement.

5. Station mobile selon la revendication 1, dans laquelle la seconde unité de mesure de porteuse (104C) est apte à réaliser une recherche de cellule, une mesure de la puissance reçue des signaux de référence et une surveillance de la liaison radio.

6. Procédé de contrôle de communication dans une station mobile (UE) qui communique avec une station de base radio (eNB) en utilisant deux porteuses ou plus, dans lequel les deux porteuses ou plus comprennent une première porteuse et une seconde porteuse, dans lequel la première porteuse et la seconde porteuse appartiennent à la même bande de fréquence, le procédé de contrôle de communication comprenant :
a) une première étape de réalisation d'une communication avec la première porteuse ; et
b) une seconde étape de réalisation d'une mesure de la seconde porteuse,
c1) dans lequel, dans la première étape, dans un cas où un intervalle de mesure établi dans la première porteuse pour mesurer la seconde porteuse est établi (B1), quand la seconde porteuse est activée, la station mobile (UE) effectue une communication avec la première porteuse sans tenir compte de l'intervalle de mesure, et
c2) quand la seconde porteuse n'est pas activée, la station mobile (UE) n'effectue pas (B2) la communication avec la première porteuse dans l'intervalle de mesure.

7. Station de base radio (eNB) qui communique avec une station mobile (UE) en utilisant deux porteuses ou plus, dans laquelle les deux porteuses ou plus comprennent une première porteuse et une seconde porteuse, dans laquelle la première porteuse et la seconde porteuse appartiennent à la même bande de fréquence, la station de base radio (eNB) comprenant :
a) une première unité de communication (202) configurée pour effectuer une communication avec la première porteuse,
b) dans laquelle, dans un cas où un intervalle de mesure établi dans la première porteuse pour mesurer la seconde porteuse est établi (B1), la première unité de communication (202) est configurée,
c1) pour effectuer une communication avec la première porteuse sans tenir compte de l'intervalle de mesure quand la seconde porteuse est activée, et
c2) dans laquelle la première unité de communication (202) est en outre configurée pour ne pas (B2) effectuer de communication avec la première porteuse dans l'intervalle de mesure quand la seconde porteuse n'est pas activée.

8. Station de base radio selon la revendication 7, dans laquelle la première unité de communication (202) est apte à transmettre des signaux de commande, via un canal de commande afin d'effectuer la programmation de liaison ascendante et de liaison descendante, de sorte que la communication avec la première porteuse ne soit pas effectuée dans l'intervalle de mesure.

9. Procédé de contrôle de communication dans une station de base radio (eNB) qui communique avec une station mobile (UE) en utilisant deux porteuses ou plus, dans lequel les deux porteuses ou plus comprennent une première porteuse et une seconde porteuse, dans lequel la première porteuse et la seconde porteuse appartiennent à la même bande de fréquence, le procédé de contrôle de communication comprenant :
a) une première étape de réalisation d'une communication avec la première porteuse,
b) dans lequel, dans un cas où un intervalle de mesure établi dans la première porteuse pour mesurer la seconde porteuse est établi,
c1) quand la seconde porteuse est activée, la station de base radio (eNB) effectue (B1) une communication avec la première porteuse sans tenir compte de l'intervalle de mesure, et
c2) quand la seconde porteuse n'est pas activée, la station de base radio (eNB) n'effectue pas (B2) la communication avec la première porteuse dans l'intervalle de mesure.
